(19) Europäisches Patentamt
European Patent Office
Office européen des brevets

(11) **EP 4 770 028 A1**

(12) **EUROPEAN PATENT APPLICATION**

(43) Date of publication:
**01.07.2026 Bulletin 2026/27**

(21) Application number: **25226538.4**

(22) Date of filing: **22.12.2025**

(51) International Patent Classification (IPC):
**H04L 41/0631** (2022.01)  **H04L 41/142** (2022.01)
**H04L 41/16** (2022.01)  **H04L 41/12** (2022.01)

(52) Cooperative Patent Classification (CPC):
**H04L 41/16; H04L 41/065; H04L 41/142;**
**H04L 41/12**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **31.12.2024 US 202419007146**

(71) Applicant: **Juniper Networks, Inc.**
**Sunnyvale, CA 94089-1206 (US)**

(72) Inventors:
• **BANKA, Tarun**
**Sunnyvale, 94089 (US)**
• **SHAN, Alexander Zhang**
**Sunnyvale, 94089 (US)**
• **SRIDHAR, Thayumanavan**
**Sunnyvale, 94089 (US)**
• **YAVATKAR, Raj**
**Sunnyvale, 94089 (US)**
• **SINGH, Rahul**
**Sunnyvale, 94089 (US)**
• **KAUR, Jasleen**
**Sunnyvale, 94089 (US)**

(74) Representative: **D Young & Co LLP**
**3 Noble Street**
**London EC2V 7BQ (GB)**

(54) **STATISTICAL METHODS AND LARGE LANGUAGE MODELS FOR ROOT CAUSE ANALYSIS**

(57) Techniques are disclosed for using prompt engineering and statistical root cause analysis (RCA) to increase the accuracy of machine learning RCA. In an example, a computing system generates a prompt for root cause analysis of an application-layer anomaly within system of elements across a plurality of layers. The prompt comprises a cross-layer topology graph of the elements across the plurality of layers, diagnostics information for the elements, and a list of the elements and corresponding diagnostics information ordered according to a likelihood of being a source of a root cause of the application-layer anomaly. The computing system provides the generated prompt to a machine learning model to obtain, based at least in part on the generated prompt, a response comprising the root cause of the application-layer anomaly. The computing system outputs the response.

FIG. 1

## Description

This application claims the benefit of US Patent Application No. 19/007,146, filed 31 December 2024, the entire contents of which is incorporated herein by reference.

## TECHNICAL FIELD

This disclosure generally relates to computer networks, and more particularly, to root cause analysis in a network system.

## BACKGROUND

A computer network is a collection of interconnected computing devices that can exchange data and share resources. A variety of devices operate to facilitate communication between the computing devices. For example, a computer network may include routers, switches, gateways, firewalls, and a variety of other devices to provide and facilitate network communication. In some cases, a computer network may be implemented in a data center having hundreds or even thousands of network devices that are part of the network.

A network management system (NMS) enables administrators to monitor, configure, and manage network devices servers. The interaction between the NMS and the network to configure it ensures the network is set up according to the desired configuration, operates correctly, and can be maintained efficiently. After discovering devices and establishing communication, the NMS can perform network configuration tasks. These tasks are executed based on the network administrator's policies, rules, or specific commands. Configuration tasks may include device configuration, which involves applying configuration files or templates to routers, switches, firewalls, etc., and may include setting IP addresses, VLANs, access control lists (ACLs), routing protocols, or other device-specific settings. Configuration tasks may also include configuring network policies, such as quality of service (QoS), traffic prioritization, security rules, and firewall policies. Configuration tasks may also include setting up services such as DHCP, DNS, network time protocol (NTP), and load balancers.

The NMS may also engage in monitoring and telemetry collection, whereby the NMS monitors the state of the network after configuration to ensure that devices remain healthy and function as expected. Telemetry data may include data relating to device health (e.g., CPU usage, memory utilization, temperature), network traffic statistics (e.g., bandwidth usage, packet drops, error rates), and link status (e.g., up/down state of interfaces, port errors), for instance. As part of network monitoring, the NMS may also perform configuration validation to ensure that the actual configuration state of a network aligns with intended configuration state of the network. If the NMS detects any discrepancies or configuration, the NMS can take action to align the actual configuration state of the network with intended configuration state of the network.

The NMS may also interact with the network by monitoring for events and generating alerts based on pre-defined thresholds or conditions. For example, if a link goes down, traffic exceeds a certain limit, or a device is nearing its resource capacity, the NMS can trigger alerts to network administrators. Such events are alternately referred to herein as "anomalies". The NMS may in some cases automatically perform predefined actions when certain alerts are triggered, such as rerouting traffic or adjusting QoS settings.

## SUMMARY

Particular aspects are set out in the appended independent claims. Various optional embodiments are set out in the dependent claims. In general, the disclosure describes techniques for using prompt engineering and statistical root cause analysis (RCA) to increase the accuracy of machine learning RCA. In an example, a computing system generates a prompt for root cause analysis of an application-layer anomaly within a system of elements across a plurality of layers. The plurality of layers include, e.g., an application layer; a compute layer; a transit gateway layer; and a gateway layer. The prompt includes a cross-layer topology graph of the elements of the system, diagnostics information for the elements, and a list of the elements and corresponding diagnostics information ordered according to a likelihood of being a source of a root cause of the application-layer anomaly. In some examples, the computing system performs statistical root cause analysis upon the diagnostics information to obtain the list of the elements and corresponding diagnostics information ordered according to the likelihood of being the source of the root cause of the application-layer anomaly.

The computing system provides the generated prompt to a machine learning model to obtain a response based at least in part on the generated prompt. In some examples, the machine learning model is a large language model (LLM). The response indicates the root cause of the application-layer anomaly and, in some cases, includes natural language instructions for remediating the root cause of the application-layer anomaly. The computing system outputs the response, e.g., for display at a display device.

The techniques of the disclosure may provide specific improvements to the computer-related field of computer networking management, orchestration, and root cause analysis that may have one or more practical applications. For example, the techniques of the disclosure may enable a network administrator to more effectively diagnose anomalies in the behavior of applications at an application-layer, and more accurately identify a root cause of such application-layer anomalies caused by issues at other layers, such as a physical layer or network layer. Moreover, by combining techniques from both statistical RCA and machine learning RCA, a system operating in accordance with the techniques of the disclosure may more accurately identify a root cause of an anomaly over conventional techniques that use either statistical RCA alone or machine learning RCA alone. In addition, a system operating in accordance with the techniques of the disclosure may accurately identify anomalies in application behavior caused by issues within the application itself, which may be difficult or impossible to differentiate from issues within the physical layer (such as resource overutilization within a server) or the network layer (such as Network Interface Controller (NIC), switch, or gateway congestion) using conventional techniques.

In one example, this disclosure describes a computing system comprising: processing circuitry in communication with storage media, the processing circuitry configured to: generate a prompt for root cause analysis of an application-layer anomaly within a system of elements across a plurality of layers, the prompt comprising: a cross-layer topology graph of the elements across the plurality of layers; diagnostics information for the elements; and a list of the elements and corresponding diagnostics information ordered according to a likelihood of being a source of a root cause of the application-layer anomaly; provide the generated prompt to a machine learning model to obtain, based at least in part on the generated prompt, a response comprising the root cause of the application-layer anomaly; and output the response.

In another example, this disclosure describes a method comprising: generating, by processing circuitry of a computing system, a prompt for root cause analysis of an application-layer anomaly within a system of elements across a plurality of layers, the prompt comprising: a cross-layer topology graph of the elements across the plurality of layers; diagnostics information for the elements; and a list of the elements and corresponding diagnostics information ordered according to a likelihood of being a source of a root cause of the application-layer anomaly; providing, by the processing circuitry, the generated prompt to a machine learning model to obtain, based at least in part on the generated prompt, a response comprising the root cause of the application-layer anomaly; and outputting, by the processing circuitry, the response.

In another example, this disclosure describes computer-readable media comprising instructions that, when executed, are configured to cause processing circuitry to: generate a prompt for root cause analysis of an application-layer anomaly within a system of elements across a plurality of layers, the prompt comprising a cross-layer topology graph of the elements across the plurality of layers; diagnostics information for the elements; and a list of the elements and corresponding diagnostics information ordered according to a likelihood of being a source of a root cause of the application-layer anomaly; provide the generated prompt to a machine learning model to obtain, based at least in part on the generated prompt, a response comprising the root cause of the application-layer anomaly; and output the response.

The details of one or more examples of the techniques of this disclosure are set forth in the accompanying drawings and the description below. Other features, objects, and advantages of the techniques will be apparent from the description and drawings, and from the claims.

## BRIEF DESCRIPTION OF DRAWINGS

FIG. 1 is a block diagram illustrating an example of a network that is managed using a network management system and analysis system, in accordance with techniques of this disclosure.

FIG. 2 is a block diagram illustrating an analysis system and an example set of components for network management system of FIG. 1, in accordance with techniques of this disclosure.

FIG. 3 is a block diagram illustrating an example system in accordance with the techniques of the disclosure.

FIG. 4 is a flowchart illustrating an example operation in accordance with techniques of this disclosure.

FIG. 5 is a flowchart illustrating an example operation in accordance with techniques of this disclosure.

FIG. 6 is a block diagram illustrating an example computing device in accordance with the techniques of the disclosure.

Like reference characters refer to like elements throughout the figures and description.

## DETAILED DESCRIPTION

Intent-based networking is a software-enabled automation process that uses high levels of intelligence, analytics, and orchestration to improve network operations and uptime. When operators describe the business outcomes they wish to accomplish, the network management system converts those objectives into the configuration necessary to achieve them, without individual tasks having to be coded and executed manually.

For example, consider the need for secure communications between two networks. An intent would broadly state that a secure tunnel is needed between Network A and Network B. An operator would identify which traffic should use the tunnel and describe any other desired general properties of the tunnel. But the operator would not necessarily specify how the tunnel is to be implemented, such as the number of devices to be used, how BGP advertisements should be made, or which specific features and parameters to turn on. Instead, an intent-based networking system may automatically generate a full configuration of all devices based on the service description. The intent-based networking system may then provide ongoing assurance checks between the intended and operational state of the network, using closed-loop validation to continuously verify the correctness of the configuration.

Intent-based networking is a declarative network operation model. It contrasts with traditional imperative networking, which requires network engineers to specify the sequence of actions needed on individual network elements and creates significant potential for error. Traditionally, networking has been driven by manual, command-line interface (CLI)-based operations, basic element management systems (EMSs), or automation scripts. Most network outages result from human errors that occur during these network operations. Intent-based networking (IBN) reduces errors and risk while improving operational efficiencies in a number of ways. For example, IBN validates intent objects before applying them to the network. Intent objects are high-level representations of the desired properties or outcomes to be achieved with the network. Validation is syntactic and includes semantic checks against networkwide policy. IBN facilitates rapid roll-back or roll-forward. Operators simply apply the appropriate versioned intent object to return to a known good state if something goes wrong during a deployment push. IBN limits the impact and scope of failures during new intent rollout through well-defined policies. IBN may enable intent-based fallback. As the system knows the desired outcomes for a specific configuration, it can maintain those outcomes even in the face of outages or device errors by reconfiguring other network elements or using different mechanisms to achieve the same results.

Modern network orchestration systems have made intent-based network systems for mission-critical and scaled deployments possible. Intent-based networks dramatically reduce the time to deliver reliable services from days or weeks to minutes and help address operational challenges once the infrastructure has been deployed. Intent-based networking may also involve intent assurance. With intent-based analytics, networks remain in compliance with the original intent for the network throughout the service lifecycle. Intent-based analytics provide insights into network services, enabling teams to think about the network as a complete service. Using analytics, intent-based networking may enable faster root-cause analysis (RCA) and identification.

## Statistical Tests and Large Language Models for Root Cause Analysis

Ensuring the reliability and availability of complex networked services demands effective root cause analysis (RCA) across cloud environments, data centers, and on-premises networks. Traditional RCA methods, which involve manual inspection of data sources such as logs and telemetry data, are often time-consuming and challenging for on-call engineers. While statistical inference methods have been employed to estimate the causality of network events, these approaches alone are similarly challenging and suffer from a lack of interpretability, making it difficult for engineers to understand the predictions made by black-box models. The techniques of the disclosure set forth an advanced on-call system that combines statistical tests and large language model (LLM) reasoning to automate RCA across various network environments. The system described herein gathers and synthesizes critical runtime diagnostic information, predicts the root cause of incidents, provides a clear explanatory narrative, and offers targeted action steps for engineers to resolve the issues. By utilizing LLM reasoning techniques and retrieval, the system described herein delivers accurate and practical support for operators.

As reliance on multi cloud platforms, data centers, and hybrid on-premises networks grows, ensuring consistent service reliability and availability across these complex environments becomes critical. In large scale networks, unexpected service interruptions or performance degradation can severely impact customer satisfaction. Currently, the diagnosis of such incidents predominantly relies on manual investigation or the use of specialized data filtering tools. Given the increasing scale and complexity of contemporary networking systems, operator intervention alone is insufficient for the effective and timely resolution of incidents.

Root cause analysis is a critical component of the incident management lifecycle, essential for identifying the underlying causes of incidents. Through root cause analysis, engineers can pinpoint the fundamental issues that triggered the incident, allowing for the implementation of corrective measures to prevent future occurrences. This process is vital for effective incident resolution, enhancing system reliability, and improving overall incident response mechanisms.

Despite the promising performance of large language models (LLMs) in incident diagnosis tasks, particularly when finetuned on incident data, they encounter several challenges when applied to root cause analysis. First, the current fine-tuning approaches assume that the model can learn all the intricate details of past incidents. However, it is well-established that LLMs are prone to hallucinations, often producing distorted or exaggerated information, as they cannot reliably recall specific details from the training data. Additionally, finetuning large LLMs is associated with considerable costs and may be infeasible for state-of-the-art models with extremely large parameter counts, such as GPT-4. Lastly, outdated knowledge from past training data becomes obsolete in the face of emerging information, motivating continuous learning methods instead. Continuous fine-tuning is required to keep the model updated with the latest knowledge, but this presents significant challenges in maintaining the model's capacity to incorporate new information effectively.

These concerns drive the adoption of a non-finetuning approach for automating root cause analysis. This approach must harness domain knowledge similarly to finetuning, but without the associated drawbacks. In some examples, a few-shot learning-based system as described herein may eliminate the need for finetuning. The proposed system wields the dual strengths of statistical RCA methods and LLM reasoning abilities. In conjunction with estimating the causality of network events, the system described herein incorporates a retrieval mechanism that selects past RCA cases as in-context exemplars, helping the LLM apply the appropriate diagnostic methods and domain expertise. Additionally, the system described herein employs advanced prompting techniques to improve consistency and enhance the reasoning depth of model responses.

Automatic root cause analysis has been investigated prior to the advent of large language models, leveraging statistical causality tests based on time series data. Some systems may implement a statistical method to construct network event causality graphs by mining time series data and applying the PC algorithm. For example, a conventional system may employ a suite of statistical methods surrounding estimating Granger causality to construct a causality graph of events. Then, the Pagerank algorithm can be used to rank the most likely root causes. Modern methods produce a ranked list of nodes which can either represent events across a time series, or a network component (e.g. a switch). These approaches are both fast and technically sound; in one implementation of statistical tests by the system described herein, the system ranks the true root cause in the top five predictions. However, there exist limitations to conventional systems that employ statistical approaches when it comes to the utility to operators/on-call engineers. For instance, a ranked list only exists as a suggestion of probable causes-it remains left to the operator to determine the proper solution. Furthermore, without any reasoning for its decision, the process of validating the model's root cause prediction is left to the on-call engineer, which is often time-consuming and mitigates the impact of automating RCA.

Large language models such as GPT-4 and Llama 3 have been trained on a vast text corpus comprising a significant portion of human generated writing on the internet. This training data enables these models to perform a variety of downstream tasks. Notably, GPT-4 is multimodal, meaning that it can generate and take input from multiple data sources at once, including text, images, code, and other data modalities. As a result of their emergent capabilities for reasoning and complex problem solving, some conventional systems have attempted to leverage LLMs for root cause analysis.

The techniques of the disclosure may improve upon such conventional systems by expanding upon the synthesis of multiple modeling techniques, such as retrieval, tool usage, and prompt engineering. Besides in-context learning, conventional systems do not employ prompt engineering techniques, such as self-consistency, chain-of-thought prompting, prompt chaining, and knowledge generation. The techniques of the disclosure leverage the advantages of prompt engineering and higher quality inputs to outperform finetuned LLMs.

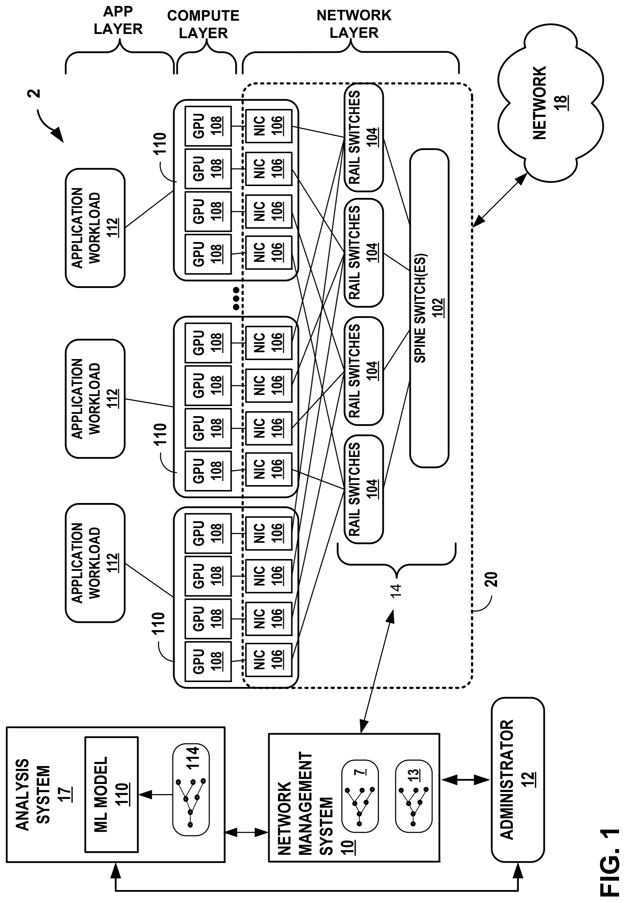

FIG. 1 is a block diagram illustrating an example system 2 that is managed using a network management system 10 and analysis system 17, in accordance with techniques of this disclosure. Network management system 10 described herein implements intent-based networking and may implement intent-based analytics.

Network devices 14 of network 20 are interconnected via communication links to form a communication topology in order to exchange resources and information. Network devices 14 include spine switches 102 and rail switches 104, which may be, for example, routers, switches, gateways, bridges, hubs, access points, servers, firewalls or other intrusion detection systems (IDS) or intrusion prevention systems (IDP), computing devices / hosts / servers / nodes, computing terminals, printers, other network devices, or a combination of such devices. While described in this disclosure as transmitting, conveying, or otherwise supporting packets, network devices within network 20 may transmit data according to any other discrete data unit defined by any other protocol. Communication links interconnecting Spine switches 102 and rail switches 104 may be physical links (e.g., fiber, copper, and the like), wireless, or any combination thereof.

Network 20 may represent a data center network that connects physical infrastructure with network devices 14. In general, a data center network is a structured system of networking devices, protocols, and infrastructure designed to support the compute, storage, and communication needs of a data center. Data centers host computing and storage systems that provide applications, data processing, and services for enterprises, cloud providers, and internet-based services. In the example of FIG. 1, physical infrastructure includes servers 110, which may be examples of host computing devices. Servers 110 may include compute servers that host highly parallelized applications and services deployed using, e.g., virtual machines, containers, or other virtual compute instances or workloads and executed by GPUs 108. Servers 110 can also include storage servers of one or more storage systems. Servers 110 are connected to network devices 14 via physical interfaces of network interface cards (NICs) 106, and network 20 interconnects compute servers and storage servers of servers 110 to enable data communications among servers 110 and distributed applications and storage.

In a data center network, network devices 14 may be structured as a data center fabric to interconnect servers 110 within one or more data centers. spine switches 102 and rail switches 104 can include Top-of-Rack switches, leaf switches, spine switches. The data center network may be built using a multi-tiered architecture to manage the large amount of internal (east-west) and external (north-south) traffic. The multi-tiered architecture may be a leaf-spine or three-tier design, for instance.

Servers 110 execute distributed application workloads for an application. In some examples, the application workloads are highly-parallelized application workloads. Examples of highly-parallelized application workloads include, e.g., machine learning workloads or graphics rendering workloads. In some examples, servers 110 may additionally execute applications to provide services. Example services can include infrastructure services such as Domain-Name Service (DNS), Dynamic Host Configuration Protocol (DHCP), authentication and directory services, backup and storage management, and load balancing. Other example services can include external or client-directed services provided to tenants or clients; such services can include enterprise applications, web/email hosting, cloud computing services (e.g., compute, storage, containers, application hosting), virtualization services (e.g., VM hosting), application servers, streaming, collaboration and communication platforms, DevOps, backup and disaster recovery, content delivery networks, and e-commerce and other financial services, for example.

Servers 110 and/or system 2 may implement network virtualization to abstract the physical networking infrastructure and create virtual network environments. Network virtualization allows for better resource allocation, scalability, and automation. For example, network devices 14 and/or servers 110 may be configured to implement virtual network overlays that support features such as virtual switches, virtual firewalls, and virtual routers to interconnect virtual compute instances or other workloads executing on servers 110. Virtualization reduces reliance on physical hardware, allowing for greater agility in managing workloads and traffic flows. Unless described in context, system 2 should be considered as including servers 110.

Network 20 is shown coupled to network 18 via one or more communication links. Network 18 may provide access to other devices accessing resources of servers 110. Network 18 may be a public network, such as the internet, a private network or VPN, or other network. Network devices 14 may communicate with one another, servers 110, and network 18 using a variety of protocols at different layers of the Open Systems Interconnect model, such as Border Gateway Protocol (BGP) or other routing protocols, Virtual Extensible LAN (VXLAN), Ethernet VPN or BGP-EVPN, layer 2 protocols, and so forth.

Network management system 10 is communicatively coupled to network devices 14 via network 20. Network management system 10 may be coupled either directly or indirectly to the various network devices 14. Once network devices 14 are deployed and activated, administrator 12 uses network management system 10 to manage and monitor the network devices, e.g., using device management protocols. Administrator 12 may be a human operator or a computing system.

Network management system 10, also referred to herein as a network management system (NMS), and network devices 14 can be centrally maintained by an administrative group, such as an IT group of an enterprise or provider. Administrator 12 interacts with network management system 10 to remotely configure, monitor, and analyze network devices 14. For example, administrator 12 may receive alerts from network management system 10 regarding any of network devices 14. The alerts may include alerts regarding anomalous operation of one or more of network devices 14 that is detected using the techniques described herein. Administrator 12 may also view configuration data of network devices 14, modify the configurations data of network devices 14, add new network devices to network 20, remove existing network devices from network 20, or otherwise manipulate the network 20 and network devices therein. Although described with respect to an network, the techniques of this disclosure are applicable to other network types, public and private, including LANs, VLANs, VPNs, and the like.

Administrator 12 can use network management system 10 to configure network devices 14 to specify certain operational characteristics that further the objectives of administrator 12. For example, administrator 12 may specify for a network device 14 a particular operational policy regarding security, device accessibility, traffic engineering, quality of service (QoS), network address translation (NAT), packet filtering, packet forwarding, rate limiting, or other policies. Network management system 10 uses one or more network management and automation protocols designed for setting configuration data within network devices 14 and obtaining telemetry data indicative of the operational states of network devices. Such protocols may include Simple Network Management Protocol (SNMP), Network Configuration Protocol (NETCONF) or RESTCONF, OpenFlow / P4 or other protocols used in software-defined networking (SDN), telemetry protocols such as gRPC, and so forth. Network management system 10 may employ one or more automation frameworks that interact with network devices 14 via SSH or REST APIs to automate the deployment and configuration of network 20. Network management system 10 and network devices may communicate using communications 15 in accordance with protocols described above.

A user configuration of devices may be referred to as an "intent." An intent-based networking system may help to allow administrators to describe the intended network/compute/storage state. In some aspects, user intents can be categorized as business policies or stateless intents. Business policies, or stateful intents, may be resolved based on the current state of a network. Stateless intents may be fully declarative ways of describing an intended network/compute/storage state, without concern for a current network state.

In some aspects, stateful intents may include intents with respect to anomaly detection within the network. Such intents may be referred to as anomaly detection intents. As an example, an administrator may express an intent that the system reports an anomaly with respect to a network device if an operating characteristic of the network device varies from a baseline value established as described herein by more than a user-specified threshold. The intent may be applied to a single network device or groups of network devices. Examples of such groups include network devices of the same make and model, network devices from the same vendor, network device in the same area, etc.

Network management system 10 may implement intent-based networking to automate and manage network 20 using an intent-based approach in which administrator 12 defines how the network is to be configured and operate (intent 7), and network management system 10 ensures that the network configuration and operation match intent 7. Network management system 10 models a representation of network 20 as network graph 13 in which network devices 2, links, interfaces, and other network components are nodes, while the relationships or connections between the nodes are edges. Edges may thus represent physical cabling, logical links, protocols, or data flows, for example. Network graph 13 is a graph-based data model that enables users to visualize and manage the entire network holistically. Network graph 13 may be stored using a graph database (graphDB), which can be queried using a graph query language.

Using network graph 13 to model network 20, network management system 10 enables visually representing the state of network 20, providing insight into how devices and services are connected. The structure allows for a comprehensive view of the network as a whole, visualizing the relationships between devices, paths of data flows, and dependencies between different elements of system 2.

Administrator 12 using network management system 10 specifies a high-level intent 7 for system 2. Intent 7 for system 2 is high-level configuration data that describes and/or defines the desired outcomes for the architecture, configuration, and operation of system 2 rather than specific configuration details. For example, instead of configuring individual network devices, administrator 12 can specify isolation of specific workloads or certain traffic should be load-balanced. Intent 7 for system 2 may be specified by administrator 12 using network management system 10 in a variety of ways. For example, intent 7 may be expressed may be expressed as structured input parameters, e.g., according to YANG, JavaScript Object Notation (JSON), or other data modeling language. Network management system 10 may provide APIs, CLIs, or other means by which administrator 12 may specify, interact with (e.g., query), and update the intent.

In some examples, intent 7 is specified as a template or model (also referred to as a "blueprint"). The intent may include a physical topology for the layout of network devices 14, servers 110, and links among these devices; a logical topology defining how the network is logically segmented (e.g., subnets, VLANs, and routing policies) and how traffic is logically routed among network devices 14 and servers 11; intent-based policies that specify, e.g., requirements for security, performance, or compliance; and/or roles for the network devices 14 or other system 2 components (e.g., "spine switch", "leaf switch", "link") as well as relationships among network devices 14 or other system 2 components. Intent 7 may be a network graph (an "intent network graph"). Intent 7 may be a directed acyclical graph. Intent 7 may be queryable using a graph query language.

Network management system 10 may use intent 7 to generate a corresponding network graph 13 that represents the implementation of intent 7. Whereas intent 7 is a high-level specification, network graph 13 captures the operational details of system 2, such as device configurations, link status, and data flows. Network management system 10 translates the high-level specification to low-level configuration data for network devices 14, for instance, and configures the system 2 with this low-level configuration data in a manner that is therefore based on intent 7, ensuring that the actual network topology and configuration aligns with what was specified. That is, network management system 10 using network graph 13 ensures that the actual state of system 2 aligns with the intended state specified by intent 7. Network management system 10 checks and verifies that all devices are configured and operating in accordance with the defined intent. Changes in the network determined from configuration or telemetry data obtained from system 2 are reflected in network graph 13 in real time, and network management system 10 can respond automatically to deviations by making corrections to align system 2 to intent 7 or by notifying administrator 12.

Network management system 10 using network graph 13 may perform closed-loop automation in which system 2 is continuously monitored and adjusted to meet the intended state without manual intervention. By network graph 13, network management system 10 may continuously validate network performance, reduce misconfigurations, and ensure compliance with design policies.

Network graph 13 may be queried by administrator 12, e.g. using network management system 10 or another system. Network graph 13 is continuously updated to reflect the real-time state of the network, allowing administrator 12 to execute graph queries that give insights into the state and relationships of network devices 14. Graph queries are based on relationships between nodes, such as finding the path between two devices or determining how a service flows through the network. Graph queries can thus help administrator 12 perform a variety of tasks, such as troubleshooting, monitoring, and configuration changes. For example, a graph query can enable topology discovery by traversing network graph 13 to retrieve the entire network topology, including all devices and their interconnections. This can provide visibility into how all switches, routers, and links are connected. A graph query may be used to find all devices and links between server 110 and network device 14C. A graph query can retrieve information indicating the status of all or a subset of network devices and links in network graph 13. Other graph queries may include those relating to bandwidth and resource utilization, redundancy and resilience, or policy compliance. Graph queries may be expressed using GraphQL, Cypher, Gremlin, SPARQL, Property Graph Query Language (PGQL), or other supported language(s) to extract specific data or insights from network graph 13. Graph queries may be run via REST API, internally, or via another type of interface.

Network management system 10 determines anomalies in system 2. In general, an anomaly is a deviation in system 2 from intent 7 (e.g., intended network configuration or operational state). Network management system 10 may determine anomalies based on configuration data or telemetry data obtained from devices of system 2 or based on probe data generated from probes to network devices 14 or servers 110, for example.

Telemetry data can be operating temperature data, voltage data, current draw data, or other operating characteristics regarding the operation of network devices 14. Other characteristics that may be collected are transmitted/received bytes/packets which indicates traffic volume, error packet count, e.g., cyclic redundancy check (CRC), frame check sequence (FCS), etc., which may indicate deteriorating operating state. Network management system 10 may analyze and use the telemetry data in various ways. During an initial baseline establishment period, network management system 10 may collect and store the telemetry data. In some aspects, the baseline establishment period may be thirty days. At the end of the baseline establishment period, controller device may determine baseline values for various parameters in the telemetry data such as a baseline temperature, baseline voltage, baseline current draw, etc. Baseline values may be established for individual network devices or groups of network devices. For example, baseline values may be established for network devices from the same manufacturer, network devices that are the same make and/or model, network devices that are in the same general area of a data center, network devices that are configured with the same software (operating system, applications, etc.) or other groupings. After baseline values for the various parameters have been established, network management system 10 may continue to receive telemetry data from network devices 14. Network management system 10 can compare the currently received telemetry data with the baseline data, and using threshold values determined according to anomaly detection intent provided by administrator 12, determine if a network device of network devices 14 is operating anomalously and in this way determine one or more anomalies for system 2.

Anomalies may include network device 14 misconfigurations, cabling issues, policy violations, unexpected traffic patterns or other load, or hardware failures, for instance. A list of example anomalies, affected nodes, and their descriptions is as follows, but additional categories and types of anomalies are contemplated.

| Anomaly | Node(s) | Schema |
|---|---|---|
| BGP | link node across neighbor interfaces identified through src/dst IP or system node with counter | Anomaly_type, system_id; ip, asn, and vrf name for src and dst; addr_family, expected vs actual session state (enum values) |
| Cabling | interface where the neighbor interface mismatch occurred + system id | Anomaly_type, system_id, device_identifier, expected vs actual neighbor interface (name) Miscable Link node is the right place to add this anomaly (a) System ID --> System node Map between id to node Find Interface name --> Find the interface node Then interface node --> associated link node |
| Interface | interface where state mismatch occurred + system id | Anomaly_type, system_id, device_identifier, expected vs actual interface state Interface node (a) |
| Hostname | system node | Anomaly_type, system_id, device_identifier, expected vs actual FQDN System node |
| Lag | Redundancy group/System node | Anomaly_type, system_id, device_identifier, interfaces_up, intf_up_count (expected vs actual) Redundancy group (a) System + mlag --> interfaces -> port channel node |
| Liveness | system or device node | Anomaly_type, system_id, device_identifier, expected vs actual aos agent names running on device System node (a) |

(continued)

| Anomaly | Node(s) | Schema |
|---|---|---|
| Route | interface node where next hop mismatch occurred + system id | Anomaly _type, system _id, device_identifier, destination subnet of route, expected vs actual route destination status (enum values)<br>Static routes, dynamic routes (auto generation from configuration underlay network), multiple type of routes<br>Match based on next hop |
| Config | device | Anomaly _type, system id, device_identifier, expected vs actual device config (string)<br>System node (a) |
| Deployment | system node | Anomaly _type, system_id, device_identifier, expected vs actual deployment status (success or failed).<br>System node (a) |
| BP Rendering | system node | anomaly _type, bp_id, list of systems with failed rendering<br>Blueprint (a) |
| Streaming | | Anomaly_type, endpoint_type, hostname, port, protocol, expected vs actual status<br>Blueprint (a) |
| Mac | interface name + system id | Anomaly _type, system_id, device_identifier, expected max_interval vs actual int_name,<br>move_count, and move interval<br>Vn endpoint (a)<br>Static vlan, Vlan, Footprint, Vn endpoint (vlan configured on the ports)<br>Corresponding<br>Interface of the system<br>Vn endpoint<br>System -> interface -> link -> interface of the otherside -> vn endpoint --> vn instance--> find the vland id |
| Mlag | Redundancy group/System node | Anomaly _type, system_id, device _identifier, int_name, intf_state, domain_state (expected vs actual)<br>Port channel (a)<br>Check the lag anomaly, how to get to it |
| Probe | Tbd: need k/v pairs | Anomaly _type, probe_id, stage_name, item_id, properties, expected vs actual anomalous range (min to max) |
| Config Mismatch | System node | Bp_id, collector_name, expected vs actual config |

**Probe Anomalies**

| Anomaly type | Nodes | Comments |
|---|---|---|
| Hot/cold interface warning | System, interface | There are three hot/cold predefined probes:<br><br>• fabric_hotcold_ifcounter<br>• spine_superspine_hotcold_ifcounter<br>• specific_hotcold_ifcounter<br>There are three stages in the **fabric_hotcold_ifcounter** probe which raise anomalies:<br>• hot_leaf_int<br>• cold_leaf_int<br>• device_hot_anomalous<br>• device cold anomalous<br>For anomalies raised in **hot_leaf_int** and **cold_leaf_int** stages, the following properties can be used to match an anomaly to graph nodes (anomaly identity property => graph node type and property):<br>• system_id => system.system_id<br>• interface => interface.if_name<br>The following graph query can be used to select a system and an interface by properties mentioned above found in an anomaly:<br>'node("system", system_id=system_id).out("hosted_interfaces").node("interface", if_name=interface_name)'<br>For anomalies raised in **device_host_anomalous** and **device_cold_anomalous** the matching should be the following:<br>• system_id => system.system_id |
| Critical services alerts | System, interface | There are two predefined probes:<br><br>• "server_sla_a"<br>• "server_sla_b"<br>There are three stages in the "server_sla_a" probe which raise anomalies in the probe:<br>• "1-day bandwidth alerts"<br>• "1-hour bandwidth alerts"<br>• "30-days bandwidth alerts"<br>For anomalies raised in them the following matching should be used:<br>• system _id => system.system_id<br>• Interface => interface.if_name<br>There is only one stage in the "server_sla_b" probe which raises alerts:<br>• "Alerting and 7-days trending"<br>Alerts in this stage are associated to systems and has only the following key:<br>• "system _id" => "system.system _id" |
| Spine Fault Tolerance | BP meta node Or all spines | In short: anomalies raised in this probe can't be associated with graph nodes as they indicate presence of problem in an entire blueprint.<br><br>This probe raises a single anomaly in the "Persistent fault intolerant traffic" stage which indicates whether a total spine-to-leaf traffic exceeds a bandwidth calculated like for bandwidth of number of spines minus number of spines which failure can be tolerated. |
| 802.1X issues | interface | This probe raises anomalies in the "Unexpected 802.1x authentication status" stage, the matching should be the following:<br>• System_id = system.system_id<br>• Interface => interface.if name |

(continued)

| Anomaly type | Nodes | Comments |
|---|---|---|
| Interface flap-ping | System, in-terface | There are three probes:<br><br>• Fabric_interface_flapping<br>• Spine_superspine_interface_flapping<br>• Specific_interface_flapping<br>The fabric_interface_flapping probe raises anomalies in the following stage:<br>• If_status_flapping<br>• System_flapping<br>Anomalies raised in the if_status_flapping stage can be associated with the following nodes according to the following matching:<br>• System_id => system.system_id<br>• Interface => interface.if_name<br>Anomalies raised in the system_flapping stage can be associated with the following nodes according to the following mapping:<br>• System_id => system.system_id |
| BGP Monitoring | System | The "Sustained BGP Session Flapping" stage raises anomalies which can be directly mapped by and to:<br>• System_id => system.system_id<br>These anomalies as built-in BGP anomalies have the following identity attributes:<br>• Af<br>• Dest_asn<br>• Dest_ip<br>• Source_asn<br>• Source_ip<br>• Vrf_name<br>And can be associated to graph paths which represent BGP sessions in the similar way as BGP built-in anomalies. |
| EVPN Host Flapping | System | The "Sustained EVPN Host Flapping" stage raises anomalies which can be mapped by and to:<br>• System_id => system.system_id |
| Resource health issues | System | |
| Device Environmental Checks | System | The following stages of this probe raises anomalies:<br>• Airflow Alarm Anomalies<br><br>• Fan State Anomaly<br>• Operational Fan Tray Count Anomaly<br>• Operational Power Supply Count Anomaly<br>• Power Supply Fan State Anomaly<br>• Power Supply State Anomaly<br>• Power Supply Temperature Alarm<br>• Temperature Alarm<br>All these stages raise anomalies which can be associated to:<br>• System_id => system.system_id |
| Type -3 Route Validation | vn _instance | The "Sustained Anomalies" stage raises anomalies which can be associated with:<br>• "system _id" => "system.system _id"<br>• "vni" => "virtual_network.vn_id"<br>The following graph query can be used to find a "vn_instance" node by "system_id" and "vni": |

| Anomaly type | Nodes | Comments |
|---|---|---|
| | | 'node("system", system_id=system_id).out("hosted_vn_instances").node("v n instance", name="vn_instance").out("instantiates").node("virtual_netw ork", vn_id=vni)' |
| Type-5 Route Validation | sz_instance | The "Sustained Anomalies" stage raises anomalies which can be associated with:<br>• System_id => system.system_id<br>• Rt => security_zone.vni_id<br>The following graph query can be used to select "sz _instance" node by "system _id" and "rt":<br>'node("system", system _id=system_id).out("hosted_sz_instances").node("sz _instance", name="sz_instance").in_("instantiated_by").node("security _zone", vni_id=rt)' |
| ECMP Imbalance | System | There are three probes which detect ECMP imbalance issues:<br><br>• Fabric_ecmp_imbalance<br>• Spine_superspine_ecmp_imbalance<br>• External_ecpm_imbalance<br>The fabric_ecmp_imbalance probe has the following stages which raise anomalies:<br>• System_imbalance<br>• imbalanced_system_count_out_of_range<br>Anomalies raised in system _imbalance can be associated with system nodes by:<br>• System_id => system.system_id<br>Anomalies raised in the imbalanced_system_count_out_of range stage doesn't have properties by which they could be directly associated to concrete nodes but locally they can be associated to all leaf system nodes and to all interface nodes on leafs facing leafs.<br>The spine _superspine_ecmp _imbalance probe raises anomalies in the following stages:<br>• System_tx_imbalance<br>• imbalanced_system_count_out_of_range<br>The situation is similar to the previous probe for the first stage. As for the second stage an anomaly can be associated to all spine system nodes and to all interfaces on spines facing superspines.<br>The exernal_ecmp_imbalance probe raises anomalies in the following stages:<br>• sustained_ecmp_imbalance<br>• live_system_imbalance_count<br>The situation is similar to the other two probes for the first stage. As for the second stage, an anomaly raised can be associated to all external facing leafs and their external facing interfaces. |
| Device telemetry health | System | Probe name: "device_telemetry_health"<br><br>The probe raises anomalies in the following stages:<br>• Degraded Wait Time<br>• Service Enablement Failures<br>• Sustained Execution Failures<br>• Sustained Execution Timeouts<br>• Sustained Execution Underruns<br>• Check gRPC Connection Resets<br>• Check gRPC Initial Sync Timeouts |

(continued)

| Anomaly type | Nodes | Comments |
|---|---|---|
| | | • Check gRPC Periodic Response Timeouts<br>• Check gRPC Response Processing Failures<br>• Check gRPC Sequence Number Overruns<br>• Check gRPC Server Reset Count<br>All of the stages above raise anomalies which can be associated with system graph nodes by:<br>• System _id => system.system_id |
| MLAG imbalance | Redundancy group, Interface, System | The probe raises anomalies in the following stages:<br><br>• live_mlag_imbalance<br>• live_port_channel_imbalance<br>• mlag_port_channel_imbalance_out_of_range<br>Anomalies raised in live_mlag_imbalance can be associated with the following nodes:<br>• Rack => redundancy_group.label<br>• Remote_system => system.label<br>Anomalies raised in live_port_channel_imbalance:<br>Rack => redundancy_group.label<br>• Mlag_id => interface.mlag_id<br>• Leaf => system.label<br>Anomalies raised in mlag_port_channel_imbalance_out_of_range:<br>• Rack => redundancy_group.label<br>• Mlag_id => interface.mlag_id |
| LAG Imbalance | System, Port Channel | The probe raises anomalies in the following stage:<br><br>• lag_imbalance_range<br>Anomalies can be associated with:<br>• System_id => system.system_id<br>• Port_channel_id => port _channel.port_channel_id |

Because network management system 10 continually updates network graph 13 to reflect the actual, real-time state of system 2, network management system 10 may determine anomalies by comparing network graph 13 to intent 7 for system 2. Any deviation between network graph 13 and intent 7 represents an anomaly.

When an anomaly is detected, network management system 10 associates the anomaly to specific node(s), edge(s), and/or one or more properties within network graph 13. For example, if network device 14B is down or misconfigured, this anomaly will be linked to the graph node in network graph 13 representing network device 14B. As another example, if there is a link and/or cabling-related anomaly, network management system 10 will associate the anomaly with the edge connecting two nodes. Network management system 10 may output, for display, a user interface depicting network graph 13 and visually indicating anomalies at the associated node(s) or edge(s).

Network management system 10 may use graph queries to detect, analyze, and/or report anomalies. Such graph queries may traverse the graph to look for deviations between the actual state of system 2 and intent 7. Queries may be written by administrator 12 or a network management system 10 vendor, for instance, and can be designed to check the status and/or configurations of network devices 14 and other components of system 2, find missing or misconfigured paths (e.g., an interface not assigned the correct VLAN), or analyze dependencies and their impact (e.g., how the failure of one device might affect the rest of the network), among other purposes.

Generally speaking, network management system 10 identifies multiple anomalies in system 2 that are deviations from the intent for system 2. The anomalies are each associated to one or more nodes of a network graph, e.g., as properties or "tags" of the nodes. The network graph augmented with anomaly data may be a modified intent 7 or of network graph 13. In some cases, analysis system 17 obtains the intent in a structured but non-graph form from network management system 10 and processes the intent to generate a queryable intent network graph. Analysis system 17 is a computing system and may be incorporated within network management system or be implemented and deployed to another computing system. Analysis system 17 applies a predefined graph query to the augmented network graph that matches on the nodes having the anomalies, on the relationships among those nodes, and on the anomalies themselves. The predefined graph query is associated with data that indicates which of the anomalies matched by the predefined graph query is the key anomaly. The data may further indicate other anomalies associated with the key anomaly. The key anomaly is an anomaly that is, e.g., a cause of the other anomalies associated with the key anomaly, the anomaly that has the most impact of the anomalies matched by the predefined graph query, or that is otherwise deemed as significant (e.g., "key") by an operator or expert. The analysis system may execute the predefined graph query with respect to network graph 13 and, upon a match to nodes of network graph 13, output an indication that system 2 is experiencing the key anomaly. The match may be a subgraph of network graph 13. The predefined graph query and the data may be generated, stored, and displayed as a knowledge card.

The graph query may be configured to match particular nodes of network graph 13 by node identifier. The graph query may also, or alternatively, be configured to match types of nodes of network 13 by type (e.g., "system", "leaf", "spine"). This latter case may be effectively a template that may match many different subgraphs of network graph 13, should such subgraphs experience the anomalies also matching the graph query. For example, a network many have many leaf-spine pairings/linkages. A graph query that matches type leaf out to type spine will match these pairings.

In some aspects of the techniques, analysis system 17 may map key anomalies present in system 2 into issues at the application level. Services executing on servers 110 (also referred to as "compute nodes") connected via network 20 and clients interacting with the services may be impacted by key anomalies. Analysis system 17 may store service impact data that indicates one or more services that may be impacted by a key anomaly. For example, a down interface may prevent access to a service running on a compute node that uses the interface for communication. Upon identifying a key anomaly, analysis system 17 uses the service impact data to identify one or more services that may be impacted by the key anomaly. Analysis system 17 may output an indication of the one or more services. In some examples, analysis system 17 extends a visual depiction of at least a portion of the topology of the network to include the service topology, effectively extending network graph 13 to visually indicate services and/or clients that are affected by a key anomaly. Returning to the above example, service impact data associated with a key anomaly specifies that a down interface of a leaf switch may impact all services running on a compute node connected to the down interface of the leaf switch. Analysis system 17 may extend a topology of the network to indicate the services running on the affected compute node and, in some cases, to indicate clients connected to the services. These indications of affected services and clients may be considered synthetic anomalies, in that they are not identified by network management system 10 using telemetry, configuration, or operational data from the network or compute nodes, but they are instead identified as likely to occur due to a key anomaly, based on the service impact data.

In some aspects of the techniques, network management system 10 associates operational data to one or more nodes of a network graph representing an intent, e.g., intent 7. Such operational data can indicate, for instance, down interfaces, hold/cold interfaces, interface flapping, bad optics, lag issues, resource utilization, environmental factors (fan, power, temperature), device traffic, configuration deviations, a number of routes in an EVPN, a flood list size for an EVPN, and so forth. As examples, a CPU utilization for leaf switch may be 80%, a link may have a lag of >1ms, or an EVPN flood list may be 25 interfaces. The operational data is associated to one or more nodes of the network graph, e.g., as properties or "tags" of the nodes. Analysis system 17 applies a predefined graph query to the network graph that matches on the nodes having properties that satisfy thresholds defined in the graph query, on the relationships among those nodes, and on the properties that satisfy the thresholds. The predefined graph query may be based on a Service Level Agreement (SLA) / Service Level Expectation (SLE) for the network. The predefined graph query is associated with data that analysis system 17 used to identify and indicate one or more affected nodes of the network. Analysis system 17 may execute the predefined graph query with respect to the network graph and, upon a match to nodes of the network graph, output an indication that one or more affected nodes of the network are experiencing an issue, e.g., low / poor health, or a positive indication that one or more "affected nodes" are meeting the SLAs/SLEs. The match may be a subgraph of a network graph representing an intent.

Analysis system 17, network management system 10, and/or administrator 12 may operate to address one or more anomalies based on a determination of a matching subgraph that indicates a plurality of the anomalies are associated, and/or based on identifying the key anomaly. For example, analysis system 17 may send an indication of a key anomaly and/or of an association of a plurality of anomalies to network management system 10 to cause network management system 10 to perform one or more actions to address at least one of the plurality of anomalies. In some cases, analysis system 17 may automatically address at least one of the plurality of anomalies directly. In some cases, an operator (e.g., administrator 12) makes a physical change (e.g., recabling), a configuration change, or other change to system 2 to address at least one of the plurality of anomalies. These operations and changes may be performed automatically in some cases by analysis system 17 and/or network management system 10, or in response to user input from administrator 12.

In accordance with the techniques of the disclosure, analysis system 17 uses prompt engineering and statistical RCA to increase the accuracy of machine learning RCA performed by machine learning (ML) model 110. In an example, an application-layer anomaly occurs within an application workload 112 executed by servers 110. Analysis system 17 generates a prompt for RCA of the application-layer anomaly for providing, as an input, to ML model 110. The prompt may include (1) cross-layer topology graph 114 of the elements of system 2 across the plurality of layers, (2) diagnostics information for the elements, and (3) a list of the elements and corresponding diagnostics information ordered according to a likelihood of being a source of a root cause of the application-layer anomaly.

Cross-layer topology graph 114 comprises nodes and edges. Each node of the nodes corresponds to an element of system 2, such as application workloads 112, servers 110, GPUs 108, NICs 106, rail switches 104, spine switches 102, transit gateway switches (not depicted in FIG. 1), gateway switches (not depicted in FIG. 1), and other various elements of system 2 across a plurality of layers. The plurality of layers include, e.g., an application layer; a compute layer; a transit gateway layer; and a gateway layer. In some examples, additional or alternate layers may be used, such as a virtual private cloud (VPC) layer, a GPU layer, a NIC layer, a compute layer, and/or a network device layer, etc. Each edge of the edges corresponds to a connection between two elements of system 2. In some examples, a JavaScript Object Notation (JSON) object comprises cross-layer topology graph 114. Additional information regarding the construction of cross-layer topology graph 114 is set forth in more detail below.

The diagnostic information comprises metrics data or telemetry data for each corresponding element of the elements of system 2. In some examples, analysis system 17 performs statistical RCA upon the diagnostics information to obtain the list of the elements ordered according to the likelihood of being the source of the root cause of the application-layer anomaly.

Analysis system 17 provides the generated prompt to ML model 110 to obtain, based at least in part on the generated prompt, response 112. In some examples, ML model 110 is a large language model (LLM). Response 112 comprises the root cause of the application-layer anomaly and natural language instructions for remediating the root cause of the application-layer anomaly. Analysis system 17 outputs, e.g., for display at a display device (not depicted in FIG. 1), response 112 to assist administrator 12 in troubleshooting the anomaly and remediating the root cause. Alternatively, analysis system 17 may output response 112 for audio rendering and output via a speaker (e.g., a conversational AI device or smart device), for storage to a log, or other form of output.

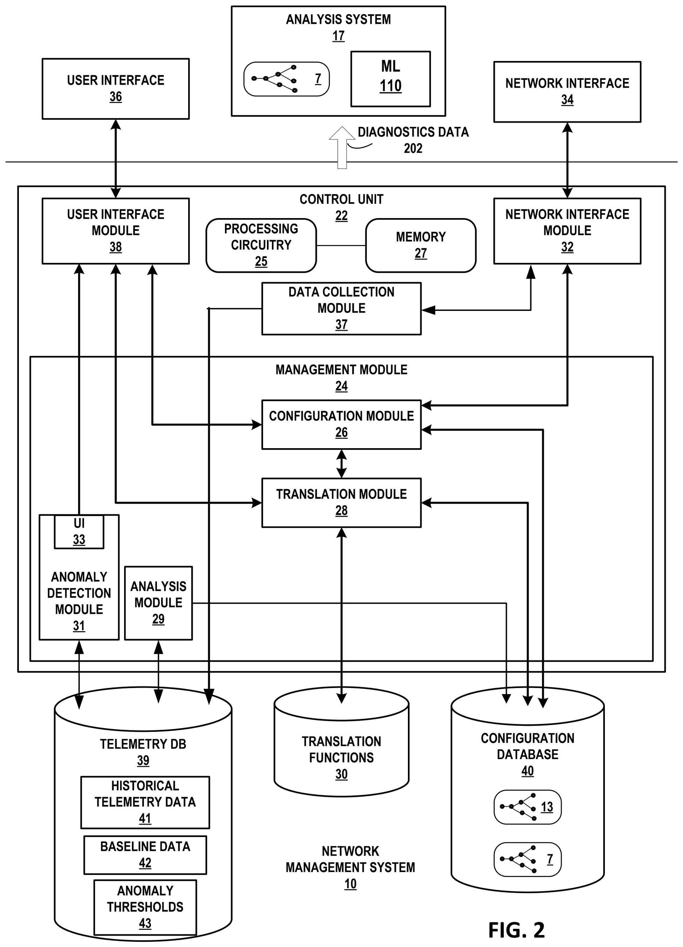

FIG. 2 is a block diagram illustrating analysis system 17 and an example set of components for analysis system 17 of FIG. 1, in accordance with techniques of this disclosure.

Network management system 10 and analysis system 17 may include processing circuitry 25, memory 27, one or more input devices, one or more communication units, and one or more output devices. (Processing circuitry 25 and memory 27 are shown only for network management system 10 in FIG. 2, but analysis system 17 may in some implementations include separate instances of processing circuitry 25 and memory 27.) In some examples, the processing circuitry 25 includes one or more of a microprocessor, a controller, a digital signal processor (DSP), an application specific integrated circuit (ASIC), a field-programmable gate array (FPGA), or equivalent discrete or integrated logic circuitry, or other types of processing circuitry 25. Network management system 10 analysis system 17 may use the processing circuitry 25 to perform operations in accordance with one or more aspects of the present disclosure using software, hardware, firmware, or a mixture of hardware, software, and firmware residing in and/or executing the network management system 10 and analysis system 17, and may be distributed among one or more devices. The one or more storage devices of memory 27 may be distributed among one or more devices. Processing circuitry 25 and memory 27 may provide an operating environment or platform for one or more modules or units, which may be implemented as software, but may in some examples include any combination of hardware, firmware, and software. Processing circuitry 25 may execute instructions and the one or more storage devices, e.g., memory 27, may store instructions and/or data of one or more modules or units. The combination of the processing circuitry 25 and memory 27 may retrieve, store, and/or execute the instructions and/or data of one or more applications, modules, units, or software. Processing circuitry 25 and/or memory 27 may also be operably coupled to one or more other software and/or hardware components, including, but not limited to, one or more of the components illustrated in FIG. 2.

In another example, network management system 10 and analysis system 17 are implemented on any suitable computing system having one or more computing devices, such as desktop computers, laptop computers, gaming consoles, smart televisions, handheld devices, tablets, mobile telephones, smartphones, etc. In some examples, at least a portion of network management system is distributed across a cloud computing system, a data center, or across a network, such as the Internet, another public or private communications network, for instance, broadband, cellular, Wi-Fi, and/or other types of communication networks, for transmitting data between computing systems, servers, and computing devices.

In some examples, network management system 10 and analysis system 17 are connected by and communicate via a network. In some examples, analysis system 17 is implemented as one or more modules of units of network management system 10.

In this example, network management system 10 includes control unit 22, network interface 34, and user interface 36. Network interface 34 represents an example interface that can communicatively couple network management system 10 to an external device, e.g., one of network devices 14 of FIG. 1. Network interface 34 may represent a wireless and/or wired interface, e.g., an Ethernet interface or a wireless radio configured to communicate according to a wireless standard, such as one or more of the IEEE 802.11 wireless networking protocols (such as 802.11 a/b/g/n or other such wireless protocols). Network management system 10 may include multiple network interfaces in various examples, although only one network interface is illustrated for purposes of example.

Control unit 22 represents any combination of hardware, software, and/or firmware for implementing the functionality attributed to control unit 22 and its constituent modules and elements. When control unit 22 includes software or firmware, control unit 22 further includes any necessary hardware for storing and executing the software or firmware, such as one or more processors or processing units. In general, a processing unit may include processing circuitry, one or more microprocessors, digital signal processors (DSPs), application specific integrated circuits (ASICs), field programmable gate arrays (FPGAs), or any other equivalent integrated or discrete logic circuitry, as well as any combinations of such components. Furthermore, a processing unit is generally implemented using fixed and/or programmable logic circuitry.

User interface 36 represents one or more interfaces by which a user, such as administrator 12 (FIG. 1) interacts with network management system 10, e.g., to provide input and receive output. For example, user interface 36 may represent one or more of a monitor, keyboard, mouse, touchscreen, touchpad, trackpad, speakers, camera, microphone, or the like. Furthermore, although in this example network management system 10 includes a user interface, it should be understood that administrator 12 need not directly interact with network management system 10, but instead may access network management system 10 remotely, e.g., via network interface 34.

In this example, control unit 22 includes user interface module 38, network interface module 32, data collection module 37, and management module 24. Control unit 22 executes user interface module 38 to receive input from and/or provide output to user interface 36. Control unit 22 also executes network interface module 32 to send and receive data (e.g., packets) via network interface 34. User interface module 38, network interface module 32, data collection module 37 and management module 24 may again be implemented as respective hardware units, or in software or firmware, or a combination thereof.

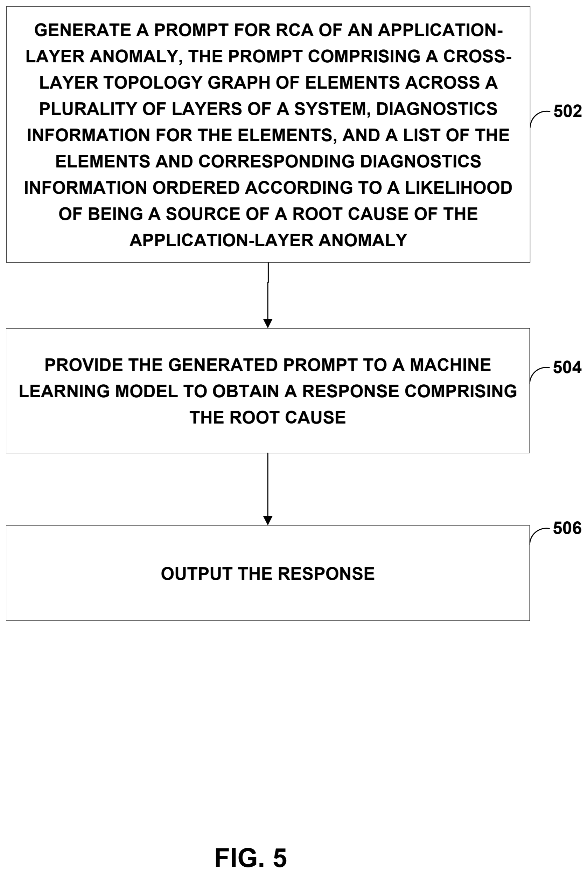

Example user interfaces generated and output by user interface module 38 or a similar user interface module of analysis system 17 are depicted in FIGS. 5, 6A-6D, 11, 12A, and 13A.

Control unit 22 can execute data collection module 37 to obtain telemetry data from network devices, e.g., network devices 14 (FIG. 1). Data collection module 37 may store the telemetry data in telemetry database (DB) 39 as a time series of telemetry data. Data collection module 37 can obtain telemetry data from network devices using a "push" model or a "pull" model. In the push model, a network device (e.g., an agent on a network device), is configured to periodically send telemetry data to data collection module 37. In the pull model, data collection module 37 periodically requests that the network device (e.g., the agent on the network device) provide the telemetry data to data collection module 37. The service interval can be configurable depending on what kind of telemetry data is being collected. As an example, data may be collected every five seconds for optical transceivers. Data collection module 37 may store telemetry data obtained during the baseline establishment period as historical telemetry data 41. In addition to storing the telemetry data, data collection module 37 may store a timestamp in association with the telemetry data to indicate when the telemetry data was collected.

Control unit 22 executes management module 24 to manage various network devices, e.g., network devices 14 of FIG. 1. Management includes, for example, configuring and analyzing the network devices according to instructions received from a user (e.g., administrator 12 of FIG. 1) and providing the user with the ability to submit instructions to configure and analyze the network devices. In this example, management module 24 further includes configuration module 26, translation module 28, analysis module 29, and anomaly detection module 31.

Management module 24 is configured to receive an intent (e.g., a high-level configuration instruction or anomaly detection instruction) for a set of managed network devices from a user, such as administrator 12, or another system (hereinafter, "the user"). In some examples, management module 24 may be referred to herein as a "fabric manager." Over time, the user may update the configuration instructions, e.g., to add new services, remove existing services, or modify existing services performed by the managed devices. Further, the user may update anomaly detection instructions over time to change how the analysis module 29 uses telemetry data to detect an anomaly. The intents may be structured according to, e.g., YANG. In some examples, management module 24 also provides the user with the ability to submit translation functions that translation module 28 executes to transform intents to device-specific, low-level configuration instructions, as discussed below.

Network management system 10 also includes configuration database 40. Configuration database 40 may include a data structure describing managed network devices, e.g., network devices 14. Configuration database 40 may act as an intent data store, which may be used to persist and manage collections of intent data models. For example, configuration database 40 may include information indicating device identifiers (such as MAC and/or IP addresses), device type, device vendor, devices species (e.g., router, switch, bridge, hub, etc.), or the like. Configuration database 40 may store current configuration information (e.g., intent data model, or in some cases, both intent data model and low-level configuration information) for the managed devices (e.g., network devices 14). Configuration database 40 may include a database that comprises a intent data model. Configuration database 40 may be a graph database (graphDB) designed to represent and query data structured as graphs, consisting of nodes, edges, and properties.

Management module 24 may maintain a data structure in configuration database 40. The data structure may include a plurality of vertices and a plurality of edges, each vertex of the plurality of vertices representing a respective network device of a plurality of network devices (e.g., network devices 14) or a respective stateless intent of a plurality of stateless intents, and the plurality of edges defining relationships between the plurality of vertices. Management module 24 may receive an indication of a stateful intent. For example, management module 24 may receive intent unified-graph-modeled configuration data for a set of managed network devices from a user, such as administrator 12. This intent can be translated and configured into the graph data structure.

Translation module 28, which may also be referred to herein as a "device manager," may determine which devices are managed using configuration database 40. Translation module 28 determines which of translation functions 30 to execute on the high-level configuration instructions based on the information of configuration database 40, e.g., which of the devices are to receive the low-level configuration instructions (e.g., device-level configuration instructions). Translation module 28 then executes each of the determined translation functions of translation functions 30, providing the high-level configuration instructions to the translation functions as input and receiving low-level configuration instructions. Translation module 28 may then provide the low-level configuration instructions to configuration module 26.

After receiving the low-level configuration instructions from translation module 28, configuration module 26 sends the low-level configuration instructions to appropriate managed network devices for which configuration is to be updated via network interface module 32. Network interface module 32 passes the low-level configuration instructions to network interface 34. Network interface 34 forwards the low-level configuration instructions to the network devices. In some examples, functions of translation module 28 may be performed by network devices. For example, control unit 22 may output an indication of the high-level configuration instructions to a network device and an agent for translation module 28 operating at the network device translates the received high-level configuration instructions into low-level configuration instructions for the network device.

Although user interface 36 is described for purposes of example of allowing administrator 12 (FIG. 1) to interact with network management system 10, other interfaces may be used in other examples. For example, network management system 10 may include a representational state transfer (REST) client (not shown) that may act as an interface to another device, by which administrator 12 may configure network management system 10. Likewise, administrator 12 may configure network devices 14 by interacting with network management system 10 through the REST client.

Analysis module 29 may analyze telemetry data in telemetry database 39 to determine baseline data 42. For example, analysis module 29 may analyze a time series of data collected by data collection module 37 and stored as historical telemetry data 41 to determine baseline operating characteristics for temperature, voltage, current draw etc. of a network device. Analysis module 29 can determine multiple sets of baseline data. For example, analysis module 29 can analyze the time series of data to determine baseline operating characteristics for a particular network device and/or a group of network devices. For example, analysis module 29 can determine baseline operating characteristics for a group of network devices that are from the same vendor, that are the same make and/or model, that are in the same location, etc. In some examples, analysis module 29 may determine baseline operating characteristics with respect to a time of day, day of week, week of year etc. As an example, a network device (e.g., network device 14A of FIG. 1) may communicate more data during working hours of working days when compared to non-working hours and on weekends. As a result, baseline operating temperature, voltage, and/or current parameters may be higher during working hours than during non-working hours. As an additional example, a data center may have different temperature characteristics in different parts of the data center. For example, a data center may have different cooling capacity in different areas of the data center, or there may be more equipment generating heat in some areas of the data center. As a result, network devices in one area of a data center may have different baseline operating temperatures than network devices in a different area of the data center.

In some aspects, baseline data 42 may be based on a time series of data obtained from historical telemetry data 41 that may be collected over a thirty day period. However, other time periods greater than or less than thirty days are possible. In general, the collection period may be dependent on data storage availability of network management system 10. As new data is collected, analysis module 29 may utilize the new data to recalculate baseline data 42. For example, analysis module 29 may maintain baseline operating characteristics such as a baseline operating temperature or baseline voltage as a moving average of the most recent thirty day period.

Analysis module 29 can determine various parameters from the historical telemetry data 41 to generate baseline data 42 for network devices and groups of network devices. As an example, analysis module 29 may perform statistical analysis to determine various baseline statistical measures associated with the time series of values for operating temperature, voltage, current draw, etc. For example, analysis module 29 may determine average values, standard deviations, quantiles, percentile thresholds, probability density function, etc. Analysis module 29 can use the baseline statistical values to determine anomaly thresholds for various parameters associated with network devices and groups of network devices. The threshold may set a lower bound and/or an upper bound for an operating characteristic. Analysis module 29 can also perform regression analysis on the time series data to determine relationships between operating characteristics, and trends in the values of operating characteristics.

In some aspects, a parameter may be based on a single operating characteristics, such as temperature, voltage, current draw, etc. In some aspects, the parameter may be based on a combination of operating characteristics of the network device. Analysis module 29 can assign a score based on the values of the combination of operating characteristics. Further, analysis module 29 can perform statistical analysis of the scores determined from the time series of historical data. For example, analysis module 29 can determine a score for each set of telemetry data that is collected for a network device over time. Analysis module 29 can then determine average values, standard deviations, quantiles, percentile thresholds, probability density function, etc. for the set of scores. Analysis module 29 can use the baseline statistical values to determine anomaly thresholds for the score with respect to the network device and with respect to groups of network devices. Analysis module 29 can also perform regression analysis on the time series of scores to determine relationships between operating characteristics and the score, and trends in the values of the score.

Anomaly detection module 31 can receive current telemetry data from data collection module 37 and compare the current telemetry data to thresholds in anomaly thresholds 43. If an instant (e.g., a most recently obtained) value of a parameter determined from operating characteristics and/or network performance data in the telemetry data for a network device does not satisfy an anomaly threshold for the operating characteristic, anomaly detection module 31 can determine that an anomaly event has occurred with respect to the network device. Anomaly detection module 31 can store anomaly event related data in telemetry database 39. The event related data can include a timestamp of when the event occurred and the type of event (overvoltage, undervoltage, overcurrent, undercurrent, overtemperature, etc.). Anomaly detection module 31 can generate an alert indicating that the anomaly event has occurred. In some aspects, in response to the alert, the anomaly detection unit can output details regarding the alert on a report of network anomalies. In some aspects, in response to the alert, an administrator 12 can request that anomaly detection module 31 generate user interface data 33 to present information regarding an alert event. Anomaly detection module 31 may utilize the timestamp for the alert event to obtain telemetry data for the network device from telemetry database 39. Anomaly detection module 31 may obtain telemetry data for the network device for a first time period occurring before the anomaly was detected, a second time period when the anomaly was detected, and a third time period after the anomaly was detected. The time periods may be set to a default value, or the administrator 12 can specify the time periods to use. Anomaly detection module 31 may present the baseline values for an operating characteristic in addition to the value that caused the anomaly to be detected. For example, anomaly detection module 31 can present the baseline value for the network device characteristics, or a group to which the device belongs, and can present the value that caused the anomaly to be detected. Additionally, anomaly detection unit can present network traffic data flowing through the network device at the time the anomaly occurred.

Anomaly detection module 31 may perform linear regression on the time series database to determine if an operating characteristic for a network device is trending away from the baseline value. If the rate of change exceeds a threshold value, anomaly detection module 31 can indicate an anomaly for the network device exhibiting the trend.

Anomaly detection module 31 may store anomaly data to memory 27 or, e.g., to an internal or external database and may output diagnostics data 202 to analysis system 17. In some examples, diagnostics data 202 includes telemetry data or metrics data for network devices 14 of FIG. 1.

In accordance with the techniques of the disclosure, analysis system 17 uses prompt engineering and statistical RCA to increase the accuracy of machine learning RCA performed by machine learning (ML) model 17. In an example, an application-layer anomaly occurs within an application workload 112 for an application executed by servers 110. Analysis system 17 generates a prompt for RCA of the application-layer anomaly for providing, as an input, to ML model 110. The prompt may include (1) cross-layer topology graph 114 of the elements of system 2 across the plurality of layers, (2) diagnostics information for the elements, and (3) a list of the elements and corresponding diagnostics information ordered according to a likelihood of being a source of a root cause of the application-layer anomaly.

Cross-layer topology graph 114 comprises nodes and edges. Each node of the nodes corresponds to an element of system 2, such as application workloads 112, servers 110, GPUs 108, NICs 106, rail switches 104, spine switches 102, transit gateway switches (not depicted in FIG. 1), gateway switches (not depicted in FIG. 1), and other various elements of system 2 across a plurality of layers. The plurality of layers include, e.g., an application layer; a compute layer; a transit gateway layer; and a gateway layer. Each edge of the edges corresponds to a connection between two elements of system 2. In some examples, a JavaScript Object Notation (JSON) object comprises cross-layer topology graph 114.

In some examples, analysis system 17 prunes cross-layer topology graph 114 to remove elements that are not relevant to or associated with the execution of application associated with the application-layer anomaly. For example, analysis system 17 may prune cross-layer topology graph 114 to remove network devices 17 that are not associated with forwarding network traffic for an application associated with the application-layer anomaly. As another example, analysis system 17 may prune cross-layer topology graph 114 to remove GPUs 108 that are not associated with the execution of application workloads 112 associated with the application-layer anomaly. This may reduce the complexity of cross-layer topology graph 114, which may serve to increase the accuracy of the RCA identification by ML model 110.

The diagnostic information comprises metrics data or telemetry data for each corresponding element of the elements of system 2. In some examples, analysis system 17 performs statistical RCA upon the diagnostics information to obtain the list of the elements ordered according to the likelihood of being the source of the root cause of the application-layer anomaly.

In some examples, the prompt further includes one or more examples of application-layer anomalies and corresponding root causes. In some instances, each example includes one or more of a summary of an instance of an application-layer anomaly, a description of a root cause, and a description of one or more steps for remediating the root cause. Typically, the one or more examples are selected from a same domain as a domain of the application-layer anomaly for which ML model 110 is to perform RCA.

Analysis system 17 provides the generated prompt to ML model 110 to obtain, based at least in part on the generated prompt, response 112. In some examples, ML model 110 is a large language model (LLM). To generate the response, ML model 110 applies Chain-of-Thought reasoning to as to increase the likelihood of coherent responses. For example, ML model 110 may identify the application-layer anomaly present within the diagnostics information for network devices 17. Next, ML model 110 analyzes connectivity between elements within a plurality of layers of system 2, the elements associated with the application-layer anomaly. For example, ML model 110 may analyze Graphics Processing Unit (GPU), Central Processing Unity (CPU), and memory utilization of servers 110 at a physical layer of the network. ML model 110 may analyze Network Interface Controller (NIC) and network device 17 performance and congestion at a network layer of the network. Further, ML model 110 may analyze application performance at an application layer of the network. for example. ML model 110 forms one or more hypotheses about the root cause of the application-layer anomaly. Finally, ML model 110 verifies each of the one or more hypotheses to obtain the root cause of the application-layer anomaly.

Using the techniques disclosed herein, ML model 110 may identify, from the prompt, the root cause of the application-layer anomaly across multiple different layers of system 2. For example, ML model 110 may identify, from the prompt, as the root cause of the application-layer anomaly, at least one of: high bandwidth consumption by an application; high latency by the application; overutilization of a Graphics Processing Unit (GPU) of a server; packet acknowledgement (ACK) timeout by a Network Interface Controller (NIC) of the server; blackholing of network traffic by a transit gateway network device; packet loss by a gateway network device; overutilization of a Central Processing Unit (CPU) of the gateway network device; or network congestion within the NIC of the server or a switch.

Response 112 comprises the root cause of the application-layer anomaly and natural language instructions for remediating the root cause of the application-layer anomaly. Analysis system 17 outputs, for display at a display device (not depicted in FIG. 1), response 112 to assist administrator 12 in troubleshooting the anomaly and remediating the root cause.

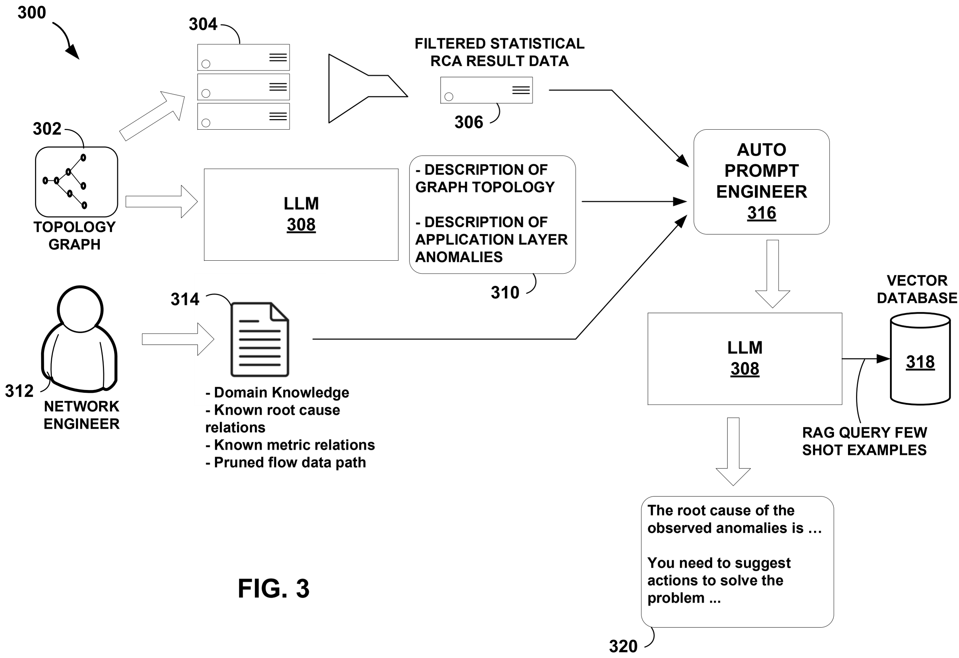

FIG. 3 is a block diagram illustrating example system 300 in accordance with the techniques of the disclosure. In some examples, system 300 may be an example of analysis system 17 of FIG. 1 or analysis system 17 of FIG. 2.

Cross-layer topology graph 302 may be an example of cross-layer topology graph 114 of FIGS. 1 or 2. Cross-layer topology graph 302 comprises nodes and edges. Each node of the nodes corresponds to an element of system 2, such as application workloads 112, servers 110, GPUs 108, NICs 106, rail switches 104, spine switches 102, transit gateway switches (not depicted in FIG. 1), gateway switches (not depicted in FIG. 1), and other various elements of system 2 of FIG. 1 across a plurality of layers. The plurality of layers include, e.g., an application layer; a compute layer; a transit gateway layer; and a gateway layer. In some examples, additional or alternate layers may be used, such as a virtual private cloud (VPC) layer, a GPU layer, a NIC layer, a compute layer, and/or a network device layer, etc. Each edge of the edges corresponds to a connection between two elements of system 2. In some examples, a JavaScript Object Notation (JSON) object comprises cross-layer topology graph 302. In some examples, analysis system 17 of FIG. 1 constructs cross-layer topology graph 302 from diagnostics data received for the elements across the plurality of layers of system 2, as described subsequently.

In some examples, to provide E2E observability, analysis system 17 supports ingestion of different types of telemetry from multiple external sources to gain visibility into the entire stack from application layer to the underlying network layer. For example, analysis system 17 represents different elements (also referred to herein as "entities") from application to network as a cross-layer topology graph 302 (also referred to herein as a "dependency graph") which is further enriched with insights gained from telemetry received from different elements represented by nodes in cross-layer topology graph 302. The following are four example types of telemetry that can be ingested: (a) Raw metrics, such as response time, request rate, training job completion time, training job accuracy, obtained from different layers, e.g., application, compute and network layers; (b) Log and Event data; (c) topology information for the network, derived from the network management layer; (similarly for compute and application layers, the topology can be inferred from the performance telemetry data by parsing metric labels); and (d) Traffic Flow data, which is applicable to network layer and can be ingested from flow collectors such as sflow collector. Service mesh or Application Performance Management (APM) tools, for instance, might provide performance telemetry for application workloads. In the case of the compute layer within a Kubernetes (K8s) environment, K8s node telemetry could serve as a source for compute performance metrics, while Nvidia DCGM could be used to monitor GPU compute health telemetry for AI/ML workloads. Analysis system 17 may support multiple external data sources due to its native support for OpenTelemetry for data collection. Similarly for the network layer, telemetry and topology can be consumed via dedicated Network/Fabric Management platforms from multiple network vendors. This collected data is used to dynamically build a cross-layer topology graph 302 for every *M-*

minute window, where they serve as a real-time cross-layer snapshot of the system state, helping network operators and Site Reliability Engineers (SREs) determine the behavior of the underlying network and its impact on the application behavior, if any.

Cross-layer topology graph 302 includes various layers (using the mentioned E2E observability techniques), based on different deployment scenarios. For example, analysis system 17 may construct a cross-layer topology graph for different monitoring windows of predetermined duration. For example, analysis system 17 may construct a first cross-layer topology graph comprising three layers: an application services layer, a compute layer, and a network layer, which is discovered during telemetry for a first time period. Analysis system 17 may construct a second cross-layer topology graph as an updated snapshot based on telemetry received for a second, subsequent time period.

Analysis system 17 may use the real-time performance data, as well as differences between cross-layer topology graphs over subsequent time intervals, to determine whether an element is anomalous. For example, by comparing different snapshots of the dependency graph to identify changes in topology and state across various monitoring periods, analysis system 17, may identify application layer performance degradation, as well as other anomalies, in application layer services. In addition, the use of cross-layer topology graphs may enable analysis system 17 to trace the anomaly propagation path from underlying network faults to application faults.

In addition to the use of telemetry to build cross-layer topology graph 302, analysis system 17 may also use Service Level Expectations as a key building block in the construction of cross-layer topology graph 302 for cross-layer observability. Service Level Expectations (SLE) quantitatively measure an extent to which desired performance requirements are met for a specific element or entity in cross-layer topology graph 302 in each monitoring time window.

For different layers of cross-layer topology graph 302, different set of KPIs may be used to define SLEs specific to the particular layer. In some examples, this is a measure between 0% and 100%, where 0% indicate SLE are not met during the entire duration of the monitoring window while a 100% SLE score indicates that SLE is met consistently during the entire monitoring window.

In hybrid and multi-cloud deployments, cross-layer topology graph 302 may include an application endpoints layer, Virtual Private Cloud (VPC) layer, transit gateway layer, and gateway router layers, for example. The terminology of each layer may depend upon the specific cloud implementation, but the basic functions are the same. Other layers not expressly described herein are contemplated with the techniques of the disclosure.

Depending on the layer, a set of KPIs are used to define layer-specific SLE. For example, SLE for an Application Endpoint layer may be determined as follows:

$APP\_SLE_{bw,i}$ is a bandwidth SLE for an application node $i$;
$APP\_SLE_{connec,i}$ is a connectivity SLE of application node $i$;
$APP\_SLE_{latency,i}$ is a latency SLE of application node $i$.

Then the application node SLE can be determined as a weighted average of the bandwidth, connectivity, and latency SLE shown above:

$$App\_SLE_i = W_{bw} \cdot App\_SLE_{bw,i} + W_{connect} \cdot App\_SLE_{connect,1} + W_{latency} \cdot App\_SLE_{latency,i},$$

where $W_{bw}$, $W_{connect}$, and $W_{latency}$ are the respective weights between 0 and 1, which add up to unity.

After SLE for an individual application endpoint is determined, it is aggregated across all $N$ application endpoint nodes in the application layer to provide a singleton metric for the layer-level SLE as shown below:

$$App_{Layer_{SLE}} = \frac{\sum_{i=1}^{N} App\_SLE_i}{N}$$

A similar approach may be followed for other layers to compute, for example, SLEs for a VPC spoke layer, a transit gateway layer, and a gateway router layer.

Whenever the aforementioned application layer SLE degrades in system 2, it is important to quickly determine a source of a root cause of the performance degradation. Analysis system 17 initiates statistical RCA in the context of the time window when the application SLE degrades. Analysis system 17 may perform a statistical RCA including the following steps.

First, analysis system 17 determines a cross-layer topology graphs with anomalies. For example, analysis system 17 determines anomalous KPIs for different elements in cross-layer topology graph 302. In one implementation, analysis system 17 uses isolation forest for anomaly detection in the time-series data corresponding to these KPIs across different layers.

Next, analysis system 17 determines a list of the anomalous KPI metrics on all anomalous elements across different layers and identifies causal relationship between anomalous elements based on cross-layer topology graph 302. Consider an example, wherein applications A1, A2, and A3 are identified as anomalous. In this example, element A1 has a metric M1 that is anomalous; element A2 has metrics M2 and M3 that are anomalous, and element A3 has a metric M4 that is anomalous. This results in 4 causal vertices between node of cross-layer topology graph 302: (A1, M1), (A2, M2), (A2, M3), (A3, M4). Now, analysis system 17 determines if there are any causal relationships between this filtered list of anomalous metrics. For scalability purposes, analysis system 17 determines may employ a hybrid approach for determining causal relationships that include a domain expert-provided causality map table and a dynamic statistical approach using Granger Causality.

The causality map table includes pairs of metrics across layers that are determined to have causal relationships based on a domain expert's knowledge. In this hybrid approach, analysis system 17 performs a lookup in the causality map table. If a causal relationship rule is not found, then analysis system 17 performs a Granger causality test. To be computationally efficient and scalable, analysis system 17 leverages knowledge of cross-layer topology graph 302 to determine a subset of anomalous metric pairs for which causality analysis is to be performed.

In some example implementations, analysis system 17 employs heuristics to perform causal analysis between two anomalous KPIs. For example, analysis system 17 may consider two application elements in the application layer for causal analysis where a path exists in cross-layer topology graph 302 between the two applications. As another example, analysis system 17 may consider an anomalous application service layer element and an anomalous compute layer element where a path exists in cross-layer topology graph 302 between the two. This enables limiting of the set of cross-layer KPIs to the most promising pairs that are likely to have causal relationship. As another example, analysis system 17 may consider an anomalous application service layer element and an anomalous network layer element for causal analysis. To do so, analysis system 17 determines a shortest network paths for all communicating pairs of anomalous application-layer services. The shortest path between the pair of anomalous application-layer services may be, e.g., a shortest path between the compute nodes hosting the pair of anomalous application-layer services. Analysis system 17 may consider only those elements within the network layer along the shortest path that are themselves anomalous for causal investigation with the application-layer anomalous service.

After causal relationship are determined using a causality map table or the Granger causality test, analysis system 17 constructs a causal graph by assigning an edge to the node pair, indicating causal relationship. Weights are assigned to the causal graph edges to capture the strength of the causal relationship using a Pearson correlation coefficient.

To identify and rank causal nodes, analysis system 17 uses a graph centrality algorithm, such as PageRank. The graph centrality algorithm enables analysis system 17 to determine a list of elements across the layers of system 2 that are ordered or ranked according to a likelihood of being a source of a root cause of the application-layer anomaly. The causal graph constructed above by identifying anomalous nodes, performing causality analysis, and assigning probabilistic distribution of weights on outgoing edges of each vertex using Pearson correlation serves as an input to the graph centrality algorithm. Analysis system 17 applies the graph centrality algorithm to obtain the list of elements across the layers of system 2 that are ordered according to the likelihood of being the source of the root cause of the application-layer anomaly. The top-ranked elements are the elements determined via statistical RCA to most likely be the source of the root cause for anomalies in system 2.

Returning to the example of FIG. 3, analysis system 17 of FIG. 1 obtains, from cross-layer topology graph 302, diagnostics data 304 for network devices 14 of FIG. 1. Analysis system 17 performs statistical RCA upon diagnostics data 304 to obtain filtered statistical RCA result data 306 as described above. In some examples, an LLM 308 (such as ChatGPT-3.5 or ChatGPT-4), processes graph 302 and associated diagnostics data 304 to produce a description of the graph topology and a description of one or more application-layer anomalies 310.

In some examples, an administrator or network engineer 312 provides information 314 describing domain knowledge, known root cause relationships, known metric or performance indicator relationships, and a pruned flow data path.

Auto Prompt Engineer 316 is a software module executed by analysis system 17 of FIG. 1. Auto Prompt Engineer 316 receives filtered statistical RCA result data 306, the description of the graph topology and a description of one or more application-layer anomalies 310, and information 314 describing domain knowledge, known root cause relationships, known metric or performance indicator relationships, and a pruned flow data path to produce a prompt for RCA of the application-layer anomaly.

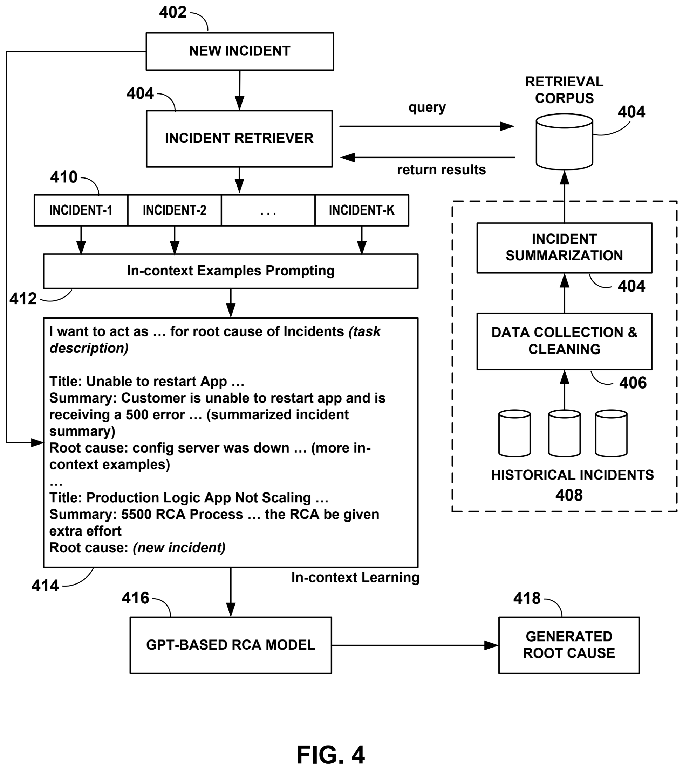

LLM 308 receives the prompt and generates, based at least in part on the prompt, response 320. In some examples, LLM 308 draws on vector database 318 to obtain examples of anomalies and root causes that belong to a same domain as the application-layer anomaly under investigation. Additional description regarding the use of vector database 318 for retrieval of in-context examples is set forth below with respect to FIG. 4. (Other types of databases besides vector databases may be used for storage and retrieval of examples, etc.) Response 320 comprises the root cause of the application-layer anomaly and natural language instructions for remediating the root cause of the application-layer anomaly.

A discussion of an experimental implementation of the techniques of the disclosure now follows. In this example, two different network topologies, each with 5 and 3 unique fault scenarios, are configured. The first network topology comprises a hybrid and multicloud network, with four layers: Application layers that possess application endpoints or subnets, Spokes that are the group of app nodes, Transit Gateways (TGW) which is an AWS construct and Gateways or Smart session routers that are application aware. In each layer, there are multiple nodes that are connected with each other. In the experimental setup, faults were injected at different time periods to reflect realistic incident scenarios that may occur in customer environments. To construct the dataset, system 300 collects samples of the network topology states across different time periods.

The second network topology represents the infrastructure running for AI/ML workloads. This topology comprises of 5 layers, Application: AI applications with training and inference workloads, GPU: Graphics Processing Units for AI applications, NICs: Network Interface Cards for connectivity, Compute: where application instances are running and Network devices: Network switches in the fabric.

As described herein, a state includes two pieces of information. The first is a snapshot of the topology graph. This snapshot captures all the nodes in the topology, their connectivity to other nodes, and their telemetry data. The second is the statistical RCA result. This is a JSON object representing an oracle perspective on the root causes of application layer anomalies. For each state, the dataset tracks the ground truth diagnosis and resolution action steps. Because the experiment injects faults at controlled intervals, each state is assigned a proper diagnosis and a corresponding reasoning chain is written to deduce the answer and accompanying resolution action steps, which is referred to as the "gold" diagnosis. At test time, system 300 can query the input states and compare its answer to the gold diagnosis and action steps.

Diagnostic Information. System 300 further receives, as an input, a set of diagnostic information required to identify the proper root cause. In contrast to conventional systems, system 300 does not include stacktraces or code retrieved from related support tickets in the diagnostic information. Instead, system 300 receives metric data for each node and the network graph topology directly as JSON-formatted data. This gives the LLM knowledge about different anomalies at each network layer, as well as the connectivity between nodes at different network layers. Additionally, operator domain knowledge can be directly injected into the input prompt, such as known relationships between metrics.

System 300 also receives, as an input, a text description of application layer anomalies. These reflect the downstream impacts of the incident and serve as a starting point for generating root cause hypotheses. System 300 generates the description by prompting an LLM to summarize the application layer metrics and highlight any anomalies, which are marked in the metric data.

There are some data sources for each network topology that are unique to the approach set forth herein. Specifically, device telemetry data (e.g. CPU utilization on a router, or latency metric on application) serves as an important source of truth for system 300. Moreover, device logs, network flow data, and traces all serve as further clues for system 300 to form, validate, and discredit different hypotheses.

Finally, system 300 makes use of statistical RCA results as an input. In particular, system 300 collects time series data on device metrics as inputs to the Granger causality test. The produced graph is then filtered using the PageRank algorithm to produce a ranking of nodes and metrics that are likely to indicate the root cause of application anomalies. This information serves as an oracle to the LLM, filtering the input data to highlight key areas of interest to form hypotheses from. This information is formatted as a system data health report, with the top K ranked nodes highlighted in the prompt (K = 5).

One major advantage to system 300 illustrated in FIG. 3, as compared with existing LLM approaches to RCA, is the integration with statistical methods. As mentioned above, a list of elements and corresponding diagnostics information ordered according to a likelihood of being a source of a root cause of the application-layer anomaly obtained via statistical RCA is used as a filtering method on input data to bring attention to the most likely culprits of observed issues. In internal testing, the true root cause is almost always within the top 5 candidates predicted by the statistical methods. Therefore, system 300 can be seen as an interpretation layer which sits on top of the statistical tests to provide a language-based interface for operators. However, system 300 operates a layer deeper than a mere text interface to these results. System 300 acts as a reasoning layer that examines the ranked list and diagnostic information before narrowing the root cause to a single hypothesis. Furthermore, based on its judgement, system 300 acts as an assistant to provide helpful action steps for operators to use during resolution time. The following discussion details specific techniques that may be used to elicit improved responses for this task from LLMs.

Statistical RCA. The statistical RCA rank list serves as a filter on input data, prioritizing a most likely root causes of observed issues. This allows system 300 to function as an interpretive layer on top of these tests, offering deeper reasoning capabilities beyond statistical results.

To compute statistical RCA, system 300 creates a causality graph. Firstly, system 300 extracts anomalous nodes from a topology graph, and runs time series correlation tests, granger causality to find out cause and effect relationships. With the help of the correlation results, system 300 determines directions between the anomalous nodes and constructs a graph. Then system 300 runs Pearson correlation to compute the strength of these relationships and assign weights to the edges in the causal graph. Lastly, system 300 runs the page rank algorithm to find the top K root cause from the causal graph.

Flow Data Input. The Flow Data Input is a data source that feeds into the model, providing a simplified, focused graph for analysis by system 300. This data is gathered through the Flow Analyzer API, which looks at network traffic between gateway nodes to understand how application traffic moves across different regions. By "pruning" the graph, only the most relevant paths are included, which shows how different parts of an application are communicating with each other. This targeted view allows system 300 to focus on specific routes, helping identify possible root causes of issues within the flow paths and reducing unnecessary complexity in troubleshooting. This process ultimately supports faster and more accurate diagnostics of network problems impacting applications.

FIG. 4 is a flowchart illustrating an example operation in accordance with techniques of this disclosure. More specifically, FIG. 4 depicts an example operation for retrieving in-context examples as performed by system 300 of FIG. 3.

As depicted in the example of FIG. 4, a GPT-based RCA ML model 416 determines that an incident is a new incident 402. In some examples, GPT-based RCA ML model 416 is an example of LLM 308 of FIG. 3. GPT-based RCA ML model 416 passes the incident to incident retriever 404, which queries retrieval corpus 404 for similar incidents. Historical incidents 408 are undergo data collection and cleaning 406, and then are summarized by incident summarization 404 before being stored in retrieval corpus 404. In response to the query by incident retriever 404, retrieval corpus 404 returns results including similar incidents to new incident 402. A set of relevant incidents 410 are provided to GPT-based RCA ML model 416 as in-context examples, which, along with new incident 402, form a portion of the prompt for RCA analysis of new incident 402 described above. The prompt is passed to GPT-based RCA ML model 416, which performs in-context learning 414 from relevant incidents 410 and new incident 402. GPT-based RCA ML model 416 generates, based at least in part on the prompt, a root cause 418 of new incident 402.

Retrieving In-Context Examples. Providing system 300 with few shot, or in-context examples, dramatically improves the model's accuracy and coherence. However, choosing which examples to provide the model is a crucial, non-trivial task. There are two factors that are most important for in-context exemplars in RCA. First, the examples must be generally related to the same domain as the input example; that is, using exemplars from a consistent topology produces stronger results. Second, the relevance of the incident issue(s) and the corresponding diagnosis is paramount. The intuition for this result is that similar incident issues often have overlapping resolution strategies or reasoning steps, leading to better results on average.

The goal for a retrieval system, such as may form a portion of system 300, is to pull the most relevant in-context exemplars to include in the prompt. This is for two reasons; first, a higher number of relevant examples is correlated with higher chances for the LLM to produce a correct diagnosis. Second, since LLMs have limited context windows, the small number of exemplars should all be relevant to avoid disrupting signals to the model. That is, if there are only 4 exemplars and 2 are misleading, the reasoning chain produced by the LLM may be inconsistent or incorrect.

In an example implementation, system 300 uses GPT-3.5-turbo to summarize the incident description and root cause for constructing the retrieval corpus and in-context examples. After summarization, system 300 generates embedding vectors for the incident summary using a sentence transformer model. From this point, system 300 constructs a retrieval index using Meta Inc.'s FAISS library, enabling efficient similarity search based on these embeddings. When a new incident arises, system 300 uses its description as a query to find relevant incidents based on the retrieval index. The extracted incidents are then integrated into the prompt of the LLM in the form of in-context examples. Finally, system 300 utilizes an LLM, such as GPT-4, to generate a root cause based on the new incident description and all the provided in-context examples.

By using a retrieval system, system 300 can leverage domain knowledge relevant to specific use cases and incident types that enable it to reach competitive performance with human engineers. In particular, it can learn from past cases by reusing specific lines of logic or domain expertise to new ones. This gives system 300 stronger performance across time, strengthening the value of the system as it oversees a topology for longer.

Prompt Engineering Techniques. Returning to FIG. 3, system 300 employs an ensemble of prompt engineering techniques to accomplish two goals; to improve the quality of reasoning chains and to reduce hallucinations. The following discussion outlines example implementations and their observed benefits to system 300.

Chain of Thought Prompting. To enforce a structured thought process, system 300 uses Chain of Thought (CoT). LLMs which produce logical steps to solve subproblems result in more accurate final answers. Analogous to breaking problems down into smaller, digestible sections, CoT prompting has been observed to elicit more complex reasoning from LLMs, including in system 300. In the system role message, system 300 is instructed to first observe anomalies across metric data, analyze node connectivity between layers, form hypotheses about the root causes, and explore each hypothesis individually. This structure produces a strong chain of thought in system 300's responses, contributing to higher accuracy.

In-Context Learning. By showing the model exemplars of the downstream task, in-context learning (e.g., few-shot learning) aims to manipulate LLMs' tendency to identify and mimic patterns. In-context learning allows models to ingest domain specific knowledge without updating model weights and dramatically improves accuracy in QA settings. In the context of system 300, the retrieval system described in FIG. 4 above is used to find the top K most-relevant exemplars from the constructed retrieval corpus.

Self Consistency. To improve reasoning chains and improve factuality, system 300 employs self consistency on the LLM. By posing the same query to the LLM multiple times, system 300 can aggregate the individual responses into a final answer that is most likely to contain the correct answer. This technique is derived from the inherent stochastic nature of LLM next-token prediction; since the generated hypotheses are subject to variance in temperature, the same query may induce the LLM to hallucinate based on its intermediate chain(s) of thought. As a safeguard, asking the LLM to produce an output multiple times independently has been demonstrated to reduce hallucinations, as well as produce more coherent chains of thought.

Retrieval-Augmented Generation. Retrieval-Augmented Generation (RAG) enhances large language models by first pulling information from external sources, which leads to more accurate answers and minimizes model errors, particularly in complex, knowledge-heavy tasks. To improve few shot example retrieval within a context window, system 300 incorporates a RAG pipeline. This facilitated effective prompt management by keeping the data layer (few-shot examples) separate from the main model logic. System 300 implements a vector database using Chroma for storing and retrieving these examples. For any new, unseen example, system 300 queries the vector database, where the Chroma retrieval model identifies the most relevant examples. This enables the generation of informed hypotheses and enhances the accuracy and relevance of model responses.

Post Processing Outputs. System 300 incorporates a final layer of processing to the outputs of the LLM. From the central LLM call that produces an explanatory narrative and diagnosis, system 300 applies a filter to convert this text to JSON format. In particular, system 300 separates the text into sections based on the distinct symptoms that are observed at the application layer. Each of these sections becomes a JSON-like object containing the explanatory narrative, a summarized diagnosis for the root cause of the symptom, and a set of relevant (node, metric) pairs representing the anomalous nodes and metrics causing the observed issue. To conduct this filtering, system 300 may, in some examples, instruct another LLM with in-context examples to take a single text section and produce a corresponding JSON-object. The JSON objects for each observed problem and root cause are returned via API call, making it easily integrated with UI visualizations.

Use cases. In this section, a set of use cases for system 300 are described. For each of the use cases, faults are injected and the response is observed from system 300.

Use Case 1: Gateway Layer Latency. Techniques of system 300 may be applied to a global private network (GPN) topology configured with injected faults at the Gateways layer. In particular, the interface between the two Gateway routers was impacted with latency, causing the peer path connection between the East and West gateway nodes to experience latency. Ultimately, this latency impacted packet traffic in the GPN, causing application layers to experience propagated latency themselves. In response to this application latency, an operator can enable system 300 for on demand analysis.

In some examples, system 300 may provide a representation of a network topology. The representation may highlight a symptom of high latency and, in this example, indicate that the root cause is localized to the Gateways layer. From this point, system 300 provides a recommendation for two action steps, along with corresponding (node, metric) pairs that are relevant to the incident. Each symptom may have its own hypothesis-a two-to-three sentence summary of the predicted root cause and its effect on the applications.

An example output of system 300 is provided below:

"\The root cause of the high latency is likely due to network congestion or issues within the Gateways layer. The high peer path latency and MOS values between the Gateways nodes VistaNetworkFault-aws-us-east-1 and VistaNetworkFault-aws-us-west-2 indicate significant delays in the network, which propagate to the App Endpoint layer, causing the observed application layer issues."

In addition to the hypothesis for each symptom, each action step has a corresponding text description, which can be accessed through the question-mark icon. An example output of system 300 comprising a description for the Change Routing Paths action is provided below:

"\If possible, change the routing paths between the Gateways nodes VistaNetworkFault-aws-us-east-1 and VistaNetworkFault-aws-us-west-2. Since the path between VistaNetworkFault-aws-us-east-1 and VistaNetworkFault-aws-us-west-2 is contributing to the high latency, one can reduce the peer path latency and overall network congestion by switching to a different path, if available. This will alleviate latency propagating to the application layer."

As seen in the hypothesis and action steps, system 300 is capable of reasoning about cross-layer problems. It also suggests specific actions based on the topology of the graph, referencing particular nodes, layers, and metrics that it has observed in its prompt context, such as the path connection between VistaNetworkFault-aws-us-east-1 and VistaNetworkFault-aws-us-west-2.

Use Case 2: Application Latency. A second use case to test the reasoning capabilities of system 300 is to inject latency into the application itself while maintaining GPN functionality. This results in a graph topology where only one application node suffers from anomalous latency. Such a topology is challenging for base LLMs because the presence of no anomalies in other layers presents a unique situation, since models are typically instructed with examples where root causes originate from another layer.

System 300 may correctly identify that the application end-points layer is responsible for the latency. This should not be surprising, given that it is the only layer with latency in the GPN. However, it correctly assesses that the application is not being interfered with by external forces-it recommends inspecting logs and checking for resource contention of the app itself. An example output of system 300 including a hypothesis for the RCA is set forth below:

"\The root cause of the high time to first data packet is likely due to an issue within the App Endpoint node vista-dev-us-west-2-vpc-1-subnet-0 .vista-dev-us-west-2-vpc-1-app itself. Since there are no anomalies reported in the Gateways or Transit Gateways layers, and no other related metrics are flagged, the problem is likely isolated to this specific App Endpoint node."

This use case demonstrates an emergent capability of system 300-the ability to create and reject hypotheses. In its reasoning chain, system 300 produces the hypothesis that the application latency is caused by external influence, such as the Gateways layer. However, after noting the lack of Gateway layer anomalies, system 300 rejects this hypothesis, instead exploring the possibility of the latency being localized to the applications layer itself.

Use Case 3: Packet Drop Blackhole in Transit Gateway. The third use case is defined to test the reasoning capabilities of system 300 when there is an anomaly in the transit gateway layer. On the AWS Transit gateway attachment, a blackhole is injected in one of the routes that results in packets being dropped. There was already light traffic between the us-east-2 and us-east-1 application endpoints, that caused TCP retransmissions to occur when the blackhole was injected.

System 300 correctly identifies that the Transit Gateway blackhole packet drop being root cause of the faulty network. It accurately explains the hypothesis of the high TCP Data retransmissions, which is due to the packet loss within the transit gateway. It also lists out actionable steps to debug the network, like monitoring Application Traffic and Investigating network configuration to mitigate the blackhole root cause in the Transit Gateway Attachment. An example output of system 300 for this use case is set forth below:

\The root cause of the high TCP data retransmissions within the App Endpoint node synapse-sausalito-spoke-us-east-2-subnet-0.synapse-sausalito-spoke us-east-2-vpc-0-app is likely due to packet loss at the Transit Gateways node VistaDev-aws-us-west-2. The high packet drop count blackhole average at the Transit Gateways node indicates that packets are being lost, which causes the application to retransmit the data packets, leading to high TCP data retransmissions."

This experiment helps to examine system 300 ability to reason root causes at the TGW layer, highlighting its capacity to reason across multiple layers and propose effective solutions for complex network problems.

Use Case 4: Gateway Resource Contention - Maximized CPU Utilization. In this use case, system 300's diagnostic capabilities are evaluated when there is high CPU utilization in the Gateway layer. The test scenario involves inducing CPU load one of the gateway nodes VistaDev-aws-us-west-2 using the stress-ng tool, resulting in processing delays. As a consequence of this high CPU usage, packet processing slows down, leading to TCP data retransmissions between application endpoints in us-west-2 and ca-central-1.

System 300 successfully diagnoses the issue, identifying the high CPU utilization on the Gateway nodes as the root cause of the increased TCP data retransmissions. By analyzing system metrics and network traffic patterns, it correctly concludes that the CPU saturation leads to delays in packet processing, which in turn causes packet loss and subsequent retransmissions. The system rules out other layers like the application endpoints and transit gateways, focusing instead on the Gateway layer, where the bottleneck originates. An example output of system 300 for this use case is set forth below:

"\The root cause of the high TCP data retransmissions is likely due to high CPU utilization on the Gateways nodes VistaDev-aws-ca-central-1 and VistaDev-aws-us-west-2. The high CPU utilization can lead to processing delays, which can cause packet loss and the need for retransmissions."

System 300 provides actionable recommendations, including monitoring CPU usage on gateway nodes, optimizing the resource allocation for the gateways, and considering load balancing or horizontal scaling to prevent CPU overload. This use case demonstrates system 300's ability to accurately correlate performance degradation with resource constraints and provide insights into mitigating the issue effectively.

Use Case 5: Increased Application Traffic. In this use case, system 300's ability to diagnose issues caused by increased application traffic is evaluated. The scenario involves a sudden surge in data transfer within the application endpoint node synapse-sausalito-spoke-us-east-2-subnet-0.synapse-sausalito-spoke-us-east-2-vpc-0-app, resulting in elevated bandwidth usage across the network. This increased traffic puts pressure on the transit gateway node VistaDev-aws-us-west-2, leading to network congestion and delays. Additionally, the high traffic triggers peer path jitter in the gateway node VistaDev-aws-ca-central-1, further compounding transmission delays.

System 300 correctly identifies the root cause of the problem as excessive data transfer within the application endpoint node, which leads to high bytes in/out metrics in the transit gateways. This increase in traffic causes network congestion and delays, particularly in the gateways layer. System 300 rules out issues with the transit gateway itself, focusing instead on the application traffic overload and the resulting ripple effects across the network. An example output of system 300 for this use case is set forth below:

"\The root cause of the high bandwidth usage is likely due to excessive data transfer within the App Endpoint node synapse-sausalito-spoke-us-east-2-subnet0.synapse-sausalito-spoke-us-east-2-vpc-0-app. This excessive data transfer is causing high bytes in average and bytes out average in the Transit Gateways node VistaDev-aws-us-west-2, leading to network congestion. Additionally, the high peer path jitter in the Gateways node VistaDev-aws-ca-central-1 is exacerbating the issue by causing further delays in data transmission."

System 300 suggests reducing the data load on the application endpoints or introducing traffic shaping to limit bandwidth usage. It also recommends monitoring jitter in the gateway nodes and optimizing peer path configurations to mitigate transmission delays. This use case showcases system 300's ability to identify traffic-induced congestion and offer targeted solutions to maintain network stability during periods of high application bandwidth usage.

Use Case 6: High GPU Utilization. In this use case, system 300 evaluates the root cause of performance anomalies due to high GPU utilization. The scenario involves the 'AIApps' node where there is an anomalously low total iteration completion time. This abnormality corresponds with GPU nodes operating at maximum capacity (100% utilization), indicating they are overworked. High utilization may lead to skipped processing steps or poor workload distribution, thus causing quicker-than-expected iteration completions.

System 300 identifies the high GPU utilization as the primary cause of the issue, with indications that overworked GPUs may miss certain processing tasks, which results in faster completion times. By focusing on the workload distribution and checking for bottlenecks within GPU resources, system 300 rules out other potential issues and directs attention to optimizing GPU task management. An example output of system 300 for this use case is set forth below:

"\The root cause of the anomalously low total iteration completion time in the 'AIApps' node is likely due to the high GPU utilization (100%) observed in multiple GPU nodes. The high utilization suggests that the GPUs are being overworked, potentially leading to skipped processing steps or insufficient workload distribution, resulting in faster-than-expected iteration completion times."

System 300 recommends balancing the workload across GPU resources to avoid over-utilization. Additionally, it suggests monitoring individual GPU node performance and redistributing tasks to prevent bottlenecks. This case illustrates system 300's capability to diagnose GPU-induced performance issues and provide solutions that enhance workload management and system efficiency.

Use Case 7: Switch Congestion. In this use case, system 300 analyzes the impact of switch congestion on iteration completion times within the 'AIApps' layer. The scenario presents an unexpectedly low iteration completion time, which system 300 attributes to a combination of network congestion, packet reordering, and elevated GPU utilization. These factors collectively disrupt data flow, potentially causing measurement inaccuracies or misconfigurations within the 'AIApps' layer and leading to the observed anomaly. System 300 identifies switch congestion and packet reordering as primary contributors to this issue. The high GPU utilization exacerbates the delay, impacting the accuracy of iteration time measurements. By ruling out other causes, System 300 focuses on these network and GPU factors as the root contributors to the unusually low iteration completion times. An example output of system 300 for this use case is set forth below:

"\The root cause of the anomalously low iteration completion time is likely due to a combination of network congestion, packet reordering, and high GPU utilization. These factors can lead to measurement inaccuracies or misconfigurations in the 'AIApps' layer, resulting in the observed low iteration completion time."

To address this, system 300 recommends optimizing network flow to reduce congestion, as well as ensuring packet order consistency across the switch. Adjusting GPU workloads could further stabilize iteration times, minimizing the impact of congestion on performance measurements. This use case highlights system 300's effectiveness in diagnosing switch-related issues and providing actionable solutions to enhance network stability and processing accuracy.

Use Case 8: Packet Acknowledgement Timeout from Nic Layer. In this use case, system 300 examines the effect of packet acknowledgment (ACK) timeout errors occurring in the 'NICs' layer on iteration completion times. The issue manifests as an anomalously low total iteration completion time, which system 300 traces to significant ACK timeout errors in the NIC nodes. These timeouts lead to interruptions in data processing, resulting in premature completion of iterations within the 'AIApps' node.

System 300 identifies ACK timeout errors in the 'NICs' layer as the primary source of the anomaly. These timeouts disrupt data transmission, causing incomplete processing and prematurely ending iteration cycles. By isolating the issue to the affected NIC nodes, system 300 rules out other potential causes, focusing on the ACK timeouts as the main contributor to the shortened iteration times. An example output of system 300 for this use case is set forth below:

"\The root cause of the anomalously low total iteration completion time is likely due to ACK timeout errors in the 'NICs' layer. The Nic nodes have recorded significant ACK timeout errors, which can lead to incomplete data processing and premature iteration completion in the 'AIApps' node."

System 300 suggests monitoring ACK response times in the affected NIC nodes and implementing measures to reduce timeout occurrences, such as optimizing network paths or enhancing NIC configurations. This use case demonstrates system 300's capability to pinpoint lower-layer network issues, like ACK timeouts, and recommend adjustments to prevent data processing interruptions.

Experimental Testing. The following discussion sets forth experimental testing and validation of a system operating in accordance with the techniques of the disclosure.

Experimental Setup. For the experimental testing, eight samples of graph topology states across different times are collected. In this test, there are two different network topologies, each with 5 and 3 unique fault scenarios respectively. A summary of each of the uses cases is provided below:

1. High App Bandwidth: Heavy burst of traffic is injected between two application endpoint due to excessive data transfer.

2. High App Latency: This scenario involves latency at the application layer, where only one node experiences delays without anomalies in other layers. One of the application nodes suffers from anomalous latency reporting high time to first data packet.

3. Over-utilization of the GPU: High GPU utilization across nodes causes premature iteration completion in the application layer, leading to potential inaccuracies or incomplete data processing.

4. NIC Ack Timeout Error: Significant packet acknowledgment ACK timeout errors in the NICs layer cause communication delays, leading to incomplete data processing and premature iteration completion in the AIApps node.

5. TGW Blackhole: A blackhole in the Transit Gateway route disrupts traffic flow, causing packet drops and triggering repeated TCP retransmissions between app endpoints.

6. Gateway Packet Loss: Packet loss in the gateway layer increases network delays, causing extended time to receive the first data packet at the application layer.

7. Gateway Resource Contention: Excessive CPU usage on gateway nodes delays packet processing, resulting in network slowdowns and increased TCP retransmissions between apps.

8. Switch Congestion: Network congestion in the NICs and Switches layers, along with overloaded GPUs at full utilization, limits application processing capacity, causing delays and congestion notification (CNP) being sent in the NICs layer.

On each of the experimental use cases, evaluation is conducted as described above that demonstrate the abilities of system 300 to determine a root cause in a network topology which is configured with injected faults.

Evaluation Criteria. To evaluate the effectiveness of system 300, an automatic evaluation mechanism for scoring the responses of system 300 on specific graphs is employed. Formally, the outputs of system 300 inference are defined to be composed of open-ended generated text and classifications, as set forth below:

1. Explanation (string): the entire text generated by the LLM containing its chain of thought leading to the diagnosis, the diagnosis itself, and the corresponding action steps at each layer.

2. Hypotheses (List[string]): For each unique problem observed at the app layer, the LLM generates a 2-3 sentence hypothesis describing the root cause and briefly explaining how the root cause impacts the app layer.

3. Actions (List[string]): For each problem observed at the app layer, the LLM generates a set of actions needed to resolve the error. Also explains how to solve the problems.

4. Tags (List[Mapping]): Another component of prediction is the classification problem of localizing root causes to specific layers, nodes, and metrics. For each problem at the app layer, system 300 creates a list of the layer(s), node(s), and metric name(s) that contributed to the root cause. Rather than text generation, these fixed sets of layers, nodes, and metric names are scored as independent class sets.

To evaluate the string contents, the similarity between two texts (or sets of texts) is measured. In this experiment, the similarity between the predicted text from system 300 and a ground truth text diagnosis is evaluated. To do so, two methods are employed. First, the BERTScore between two texts (e.g. the true explanation, and the LLM-generated explanation) is computed. BERTScore is a method that takes the embedding the words in a piece of text and attempts to find the closest embedding for each word in the embeddings of the comparison text. Essentially BERTScore measures the semantic similarity between two texts based on the closeness of the meaning of words within each text, even if the words come in different orders. Second, Sentence BERT (S-BERT) is used to take the embedding over an entire text; this involves using a transformer such as BERT to vectorize the text. Then, the cosine similarity between the embeddings of two texts is employed to produce a semantic similarity score that captures sentence-level features, such as general textual structure, phrasing, vocabulary, and meaning. The main difference between these two textual scores is that BERTScore is token-based, while S-BERT is sentence-based. In practice, this means that BERTScore is often more sensitive to the exact meanings of texts, while S-BERT captures the broader structure of a text's meaning. Note that BERTScore will provide a precision, recall, and F1 score between two texts. S-BERT will produce a scalar semantic similarity score.

To evaluate the tagging, the evaluation is formalized as a multilabel classification problem. For each problem, the answer set A is defined to contain the items {a1, a2, ... } that the root cause originated from. Let P be the set of items {p1, p2, ... } that were predicted to have caused the original problem. Items, as referred to herein, are a generalization of layers, nodes, and metrics. For example, the set of nodes {n1, n2, ... } that are related to the root cause are in $A_n$ and the predicted nodes are in $P_n$. Therefore, one may compute the precision, recall, and F1 scores for each class (layer, node, metric).

Experimental Results. The following Table 1 summarizes the results of various use cases evaluated in a few-shot environment using BERTScore and S-BERT metrics. The BERTScore measures precision (P), recall (R), and F1-scores to assess the semantic similarity of predictions, while S-BERT captures contextual similarity through sentence embeddings. The results indicate high performance across most use cases, with TGW Blackhole achieving the highest scores (0.95), reflecting strong alignment with expected outcomes. In contrast, Switch Congestion shows relatively lower scores ( 0.81), suggesting room for improvement. Overall, system 300 demonstrates effective generalization with minimal examples, especially for network-related tasks.

Table 1: Performance in few-shot environment.

| SNo | Usecase | BertScore | | | S-Bert Score |
|-----|---------|-----------|-----|-----|--------------|
| | | F1 | P | R | |
| 1 | High App Bandwidth | 0.86 | 0.86 | 0.84 | 0.89 |
| 2 | High App Latency | 0.88 | 0.89 | 0.86 | 0.92 |
| 3 | High GPU Utilization | 0.83 | 0.83 | 0.85 | 0.90 |
| 4 | NIC ACK Timeout Error | 0.86 | 0.85 | 0.87 | 0.92 |
| 5 | TGW Blackhole | 0.95 | 0.95 | 0.95 | 0.93 |
| 6 | Gateway Packet Loss | 0.91 | 0.91 | 0.89 | 0.88 |
| 7 | Gateway Resource Contention | 0.91 | 0.91 | 0.89 | 0.92 |
| 8 | Switch Congestion | 0.81 | 0.80 | 0.80 | 0.93 |

The following Table 2 presents the results of various use cases evaluated in a zero-shot environment using BERTScore and S-BERT metrics. Compared to the few-shot setting, the scores are generally lower, reflecting the challenge of performing tasks without prior examples. Notably, BERTScore shows more consistent and reliable performance across use cases, with higher precision and recall values, making it a better indicator of semantic similarity. BERTScore emerges as a more true indicator of semantic relevance, as it reflects meaningful alignment with the underlying task outcomes. In contrast, S-BERT primarily captures structural or contextual similarity, which can be less precise in zero-shot scenarios. For example, TGW Blackhole and Gateway Resource Contention show higher BERTScores (0.66), suggesting better alignment with expected behavior when no specific task guidance is provided through examples in the zero shot environment.

Table 2: Performance in zero-shot environment.

| SNo | Usecase | BertScore | | | S-Bert Score |
|-----|---------|-----------|-----|-----|--------------|
| | | F1 | P | R | |
| 1 | High App Bandwidth | 0.52 | 0.53 | 0.54 | 0.78 |
| 2 | High App Latency | 0.52 | 0.52 | 0.52 | 0.83 |
| 3 | High GPU Utilization | 0.64 | 0.61 | 0.66 | 0.88 |
| 4 | NIC ACK Timeout Error | 0.50 | 0.50 | 0.50 | 0.82 |
| 5 | TGW Blackhole | 0.66 | 0.64 | 0.68 | 0.84 |
| 6 | Gateway Packet Loss | 0.48 | 0.48 | 0.49 | 0.77 |
| 7 | Gateway Resource Contention | 0.66 | 0.66 | 0.67 | 0.89 |
| 8 | Switch Congestion | 0.51 | 0.53 | 0.49 | 0.78 |

Experimental Discussion. System 300's abilities, after internal testing on various topologies and fault injection scenarios, present a few notable trends. The following discussion sets forth the most important observations with respect to performance.

Use Case Definition. Consider the use-case Gateway Resource Contention. As discussed above, a fault was injected in the Gateway Layer, by using the stress-ng tool, the CPU was overloaded, which resulted in increase in the CPU Utilization metric in the Gateway node. This induced resource exhaustion at the gateway, which in turn impacted the Application Layer's performance, causing delays and degraded service quality.

Table 3 describes the results from the statistical RCA analysis, determining probable root cause rank 1 to be CPU utilization in the SSR routers and rank 2 to be the application latency metrics. In response to this application latency, an operator can enable system 300 for on-demand analysis. System 300 computes a summary using inputs from the topology graph information, set forth below as statistical RCA results in Table 3, and few-shot learning examples with specific prompts guiding the model as described above.

Table 3: Statistical RCA Results:

| Rank | Layer | Node | Metric |
|---|---|---|---|
| 1 | Gateways | VistaDev-aws-us-west-2 | Total_cpu_utilization |
| 2 | Application | Sausalito-spoke-us-east-2 | Applications_time_to_first_data packet_avg |
| 2 | Application | Sausalito-spoke-us-east-2 | Applications_ack_round_trip_forward_avg |

Table 4 shows a summary of the diagnosis by system 300. The symptom of high latency is highlighted and the root cause is localized to the Gateways layer. System 300 identifies that Application node being affected and High Latency as the symptom. It provides a concise hypothesis, and indicates the high data packet latency is because of the high CPU Utilization issue in one of the gateway layer nodes. Then it recommends to actions steps that can be taken on the gateway layer node. On performing these action steps, an administrator can mitigate anomalies in the networking stack. In this case there was only one symptom, for complex network topologies with nodes continuously degrading, each symptom will have its own hypothesis-a two-to-three sentence summary of the predicted root cause and its effect on the applications. As seen in the hypothesis and action steps, system 300 is capable of reasoning about cross-layer problems. It also suggests specific actions based on the topology of the graph, referencing particular nodes, layers, and metrics that it has observed in its prompt context.

Table 4: Diagnosis of root cause by System 300:

| Symptom | High Latency in the Application Layer |
|---|---|
| Root Cause Hypothesis | The root cause of the high latency is likely due to the high CPU utilization on the Gateway node VistaDev-aws-us-west-2. The high CPU utilization can cause delays in processing packets, leading to increased acknowledgment round trip times and overall latency. |
| Action Steps on Gateway Layer Node VistaDev-aws-us-west-2 | 1. Reduce the CPU load on the Gateways node VistaDev-aws-us-west-2 as the high CPU utilization on this node is likely causing delays in packet processing, leading to increased latency. |
| | 2. Implement load balancing across the Gateways nodes to distribute the processing load more evenly. |

Effectiveness. System 300 demonstrated human engineer-level analysis in a set of networking stack and fault injection scenarios from the experiments. Future work may evaluate across a broader range of network deployment scenarios and various fault situations at different scales. System 300 showcased basic reasoning in environments where the few shot examples lack relevance to the current symptom. In one fault scenario, the only in-context examples were from Gateway layer issues, but when injecting Transit Gateway layer packet blackholes, system 300 correctly determined the root cause with a perfect chain of thought. This indicates that for system 300 a small set of few shot examples were good enough to root cause unseen scenarios, and hence the approach described herein is scalable. The chain-of-thought structure demonstrated in the examples can be enough to boost performance over conventional RCA techniques.

Prompt Engineering. Since an administrator may interact with the GPT-4 model through an API, improvements to model outputs may be made through improving system 300's prompts. The most influential factor on RCA performance is the relevance and quality of the few shot exemplars present in the context window of the model at inference time. Therefore, enhancing the RAG architecture described herein to ensure that selected examples are relevant for diagnosis, especially within smaller context windows, may provide additional improvements. In addition, the use of other LLMs than GPT-4 for root cause analysis may provide additional improvements.

System 300, as described herein, implements an LLM-based system for on-demand cross-layer root cause analysis used in incident management. As discussed above, system 300 finds and synthesizes runtime diagnostic information, predicts the cause(s) of incidents, and offers a targeted set of actions for operators to mitigate the problem(s). System 300 relies on a few-shot approach to inference, where the exemplars are retrieved from a corpus of known incidents and resolutions. As described herein, an array of prompting techniques may be used to enhance the reasoning capabilities of the model and reduce hallucinations. Based on the experiments presented herein, system 300 boasts strong accuracy and coherence when tested across network topologies. In addition, the techniques of the disclosure introduce a novel evaluation framework for measuring the performance of automatic RCA systems based on semantic similarity and classification scores.

FIG. 5 is a flowchart illustrating an example operation in accordance with techniques of this disclosure. FIG. 5 is described with respect to analysis system 17 and network 2 of FIGS. 1 and 2, for convenience. More specifically, as depicted in the example of FIG. 5, analysis system 17 uses prompt engineering and statistical RCA to increase the accuracy of machine learning RCA performed by machine learning (ML) model 17.

For example, an application-layer anomaly occurs within an application executed by servers 110. Analysis system 17 generates a prompt for RCA of the application-layer anomaly for providing, as an input, to ML model 110 (502). The prompt may include (1) cross-layer topology graph 114 of the elements of system 2 across the plurality of layers, (2) diagnostics information for the elements, and (3) a list of the elements and corresponding diagnostics information ordered according to a likelihood of being a source of a root cause of the application-layer anomaly.

Cross-layer topology graph 114 comprises nodes and edges. Each node of the nodes corresponds to an element of system 2, such as application workloads 112, servers 110, GPUs 108, NICs 106, rail switches 104, spine switches 102, transit gateway switches (not depicted in FIG. 1), gateway switches (not depicted in FIG. 1), and other various elements of system 2 across a plurality of layers. The plurality of layers include, e.g., an application layer; a compute layer; a transit gateway layer; and a gateway layer. Each edge of the edges corresponds to a connection between two elements of system 2. In some examples, a JavaScript Object Notation (JSON) object comprises cross-layer topology graph 114.

The diagnostic information comprises metrics data or telemetry data for each corresponding element of the elements of system 2. In some examples, analysis system 17 performs statistical RCA upon the diagnostics information to obtain the list of the elements ordered according to the likelihood of being the source of the root cause of the application-layer anomaly.

Analysis system 17 provides the generated prompt to ML model 110 to obtain, based at least in part on the generated prompt, response 112 (504). In some examples, ML model 110 is a large language model (LLM). Response 112 comprises the root cause of the application-layer anomaly and natural language instructions for remediating the root cause of the application-layer anomaly.

Analysis system 17 outputs response 112 (506). For example, analysis system 17 outputs, e.g., for display at a display device (not depicted in FIG. 1), response 112 to assist administrator 12 in troubleshooting the anomaly and remediating the root cause. Alternatively, analysis system 17 may output response 112 for audio rendering and output via a speaker (e.g., a conversational AI device or smart device), for storage to a log, or other form of output.

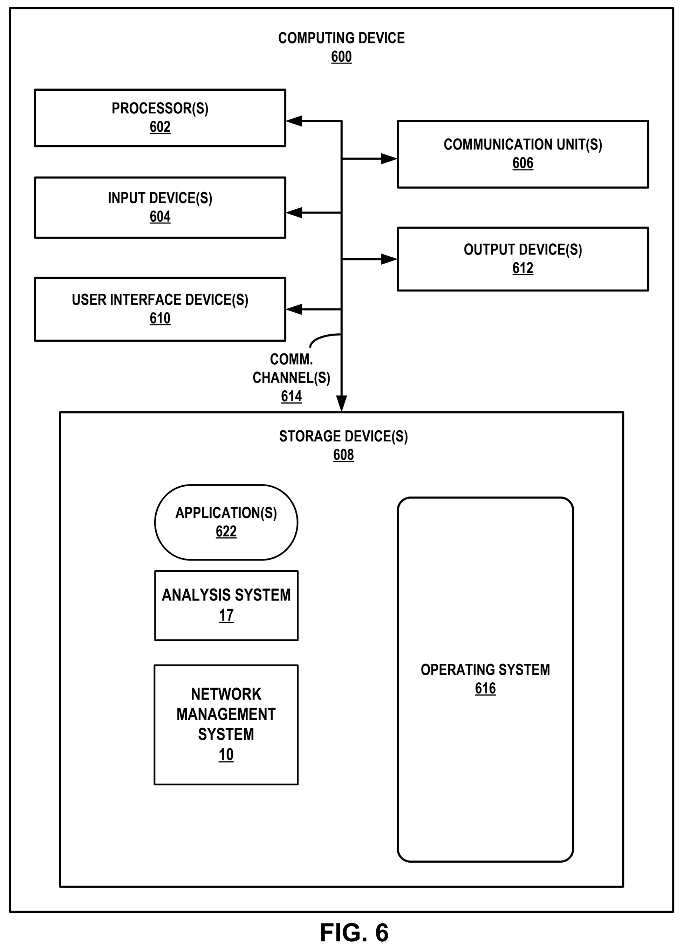

FIG. 6 is a block diagram illustrating an example computing device in accordance with the techniques of the disclosure. FIG. 6 may illustrate a particular example of a server or other computing device 600 that includes one or more processor(s) 602 for executing network management system 10 and/or analysis system 17 of FIG. 1. Other examples of computing device 600 may be used in other instances. Although shown in FIG. 6 as a stand-alone computing device 600 for purposes of example, a computing device may be any component or system that includes one or more processors or other suitable computing environment for executing software instructions and, for example, need not necessarily include one or more elements shown in FIG. 6 (e.g., communication units 606; and in some examples components such as storage device(s) 608 may not be co-located or in the same chassis as other components). Computing device 600 may be located and execute, for example, within any of servers 110 of FIG. 1 or at a branch office or cloud computing environment.

As shown in the specific example of FIG. 6, computing device 600 includes one or more processors 602, one or more input devices 604, one or more communication units 606, one or more output devices 612, one or more storage devices 608, and user interface (UI) device 610, and communication unit 606. Computing device 600, in one example, further includes one or more applications 622, network controller 24, and operating system 616 that are executable by computing device 600. Each of components 602, 604, 606, 608, 610, and 612 are coupled (physically, communicatively, and/or operatively) for inter-component communications. In some examples, communication channels 614 may include a system bus, a network connection, an inter-process communication data structure, or any other method for communicating data. As one example, components 602, 604, 606, 608, 610, and 612 may be coupled by one or more communication channels 614.

Processors 602, in one example, are configured to implement functionality and/or process instructions for execution within computing device 600. For example, processors 602 may be capable of processing instructions stored in storage device 608. Examples of processors 602 may include, any one or more of a microprocessor, a controller, a digital signal processor (DSP), an application specific integrated circuit (ASIC), a field-programmable gate array (FPGA), or equivalent discrete or integrated logic circuitry.

One or more storage devices 608 may be configured to store information within computing device 600 during operation. Storage device 608, in some examples, is described as a computer-readable storage medium. In some examples, storage device 608 is a temporary memory, meaning that a primary purpose of storage device 608 is not long-term storage. Storage device 608, in some examples, is described as a volatile memory, meaning that storage device 608 does not maintain stored contents when the computer is turned off. Examples of volatile memories include random access memories (RAM), dynamic random access memories (DRAM), static random access memories (SRAM), and other forms of volatile memories known in the art. In some examples, storage device 608 is used to store program instructions for execution by processors 602. Storage device 608, in one example, is used by software or applications running on computing device 600 to temporarily store information during program execution.

Storage devices 608, in some examples, also include one or more computer-readable storage media. Storage devices 608 may be configured to store larger amounts of information than volatile memory. Storage devices 608 may further be configured for long-term storage of information. In some examples, storage devices 608 include non-volatile storage elements. Examples of such non-volatile storage elements include magnetic hard discs, optical discs, floppy discs, flash memories, or forms of electrically programmable memories (EPROM) or electrically erasable and programmable (EEPROM) memories.

Computing device 600, in some examples, also includes one or more communication units 606. Computing device 600, in one example, utilizes communication units 606 to communicate with external devices via one or more networks, such as one or more wired/wireless/mobile networks. Communication units 606 may include a network interface card, such as an Ethernet card, an optical transceiver, a radio frequency transceiver, or any other type of device that can send and receive information. Other examples of such network interfaces may include 3G and WiFi radios. In some examples, computing device 600 uses communication unit 606 to communicate with an external device.

Computing device 600, in one example, also includes one or more user interface devices 610. User interface devices 610, in some examples, are configured to receive input from a user through tactile, audio, or video feedback. Examples of user interface devices(s) 610 include a presence-sensitive display, a mouse, a keyboard, a voice responsive system, video camera, microphone or any other type of device for detecting a command from a user. In some examples, a presence-sensitive display includes a touch-sensitive screen.

One or more output devices 612 may also be included in computing device 600. Output device 612, in some examples, is configured to provide output to a user using tactile, audio, or video stimuli. Output device 612, in one example, includes a presence-sensitive display, a sound card, a video graphics adapter card, or any other type of device for converting a signal into an appropriate form understandable to humans or machines. Additional examples of output device 612 include a speaker, a cathode ray tube (CRT) monitor, a liquid crystal display (LCD), or any other type of device that can generate intelligible output to a user.

Computing device 600 may include operating system 616. Operating system 616, in some examples, controls the operation of components of computing device 600. For example, operating system 616, in one example, facilitates the communication of one or more applications 622, network controller 24, and VPC connectivity selector 38 with processors 602, communication unit 606, storage device 608, input device 604, user interface devices 610, and output device 612.

Application(s) 622, analysis system 17, and network management system 10 may also include program instructions and/or data that are executable by computing device 600. Application 622, analysis system 17, and network management system 10 may include instructions for causing computing device to perform one or more of the operations and actions described in the present disclosure with respect to analysis system 17 and network management system 10.

Thus, from one perspective, there have now been described techniques for using prompt engineering and statistical root cause analysis (RCA) to increase the accuracy of machine learning RCA. In an example, a computing system generates a prompt for root cause analysis of an application-layer anomaly within system of elements across a plurality of layers. The prompt comprises a cross-layer topology graph of the elements across the plurality of layers, diagnostics information for the elements, and a list of the elements and corresponding diagnostics information ordered according to a likelihood of being a source of a root cause of the application-layer anomaly. The computing system provides the generated prompt to a machine learning model to obtain, based at least in part on the generated prompt, a response comprising the root cause of the application-layer anomaly. The computing system outputs the response.

The techniques described in this disclosure may be implemented, at least in part, in hardware, software, firmware or any combination thereof. For example, various aspects of the described techniques may be implemented within one or more processors, including one or more microprocessors, digital signal processors (DSPs), application specific integrated circuits (ASICs), field programmable gate arrays (FPGAs), or any other equivalent integrated or discrete logic circuitry, as well as any combinations of such components. The term "processor" or "processing circuitry" may generally refer to any of the foregoing logic circuitry, alone or in combination with other logic circuitry, or any other equivalent circuitry. A control unit comprising hardware may also perform one or more of the techniques of this disclosure.

Such hardware, software, and firmware may be implemented within the same device or within separate devices to support the various operations and functions described in this disclosure. In addition, any of the described units, modules or components may be implemented together or separately as discrete but interoperable logic devices. Depiction of different features as modules or units is intended to highlight different functional aspects and does not necessarily imply that such modules or units must be realized by separate hardware or software components. Rather, functionality associated with one or more modules or units may be performed by separate hardware or software components, or integrated within common or separate hardware or software components.

The techniques described in this disclosure may also be embodied or encoded in a computer-readable medium, such as a computer-readable storage medium, containing instructions. Instructions embedded or encoded in a computer-readable storage medium may cause a programmable processor, or other processor, to perform the method, e.g., when the instructions are executed. Computer readable storage media may include random access memory (RAM), read only memory (ROM), programmable read only memory (PROM), erasable programmable read only memory (EPROM), electronically erasable programmable read only memory (EEPROM), flash memory, a hard disk, a CD-ROM, a floppy disk, a cassette, magnetic media, optical media, or other computer readable media.

Further examples of feature combinations taught by the present disclosure are set out in the following numbered clauses:

1. A computing system comprising:
processing circuitry in communication with storage media, the processing circuitry configured to:

generate a prompt for root cause analysis of an application-layer anomaly within a system of elements across a plurality of layers, the prompt comprising:

a cross-layer topology graph of the elements across the plurality of layers;
diagnostics information for the elements; and
a list of the elements and corresponding diagnostics information ordered according to a likelihood of being a source of a root cause of the application-layer anomaly;

provide the generated prompt to a machine learning model to obtain, based at least in part on the generated prompt, a response comprising the root cause of the application-layer anomaly; and
output the response.

2. The computing system of clause 1, wherein the processing circuitry is configured to:
perform statistical root cause analysis on the diagnostics information to obtain the list of the elements and corresponding diagnostics information ordered according to the likelihood of being the source of the root cause of the application-layer anomaly.

3. The computing system of clause 1 or clause 2, wherein the cross-layer topology graph comprises nodes and edges, wherein each node of the nodes corresponds to an element of the system, and wherein each edge of the edges corresponds to a connection between two elements of the elements, the two elements residing at different layers of the plurality of layers.

4. The computing system of any preceding clause, wherein the diagnostic information comprises metrics data or telemetry data for each corresponding element of the elements.

5. The computing system of any preceding clause, wherein a JavaScript Object Notation (JSON) object comprises the cross-layer topology graph.

6. The computing system of any preceding clause, wherein the processing circuitry is configured to:
prune the cross-layer topology graph to remove elements not associated with the execution of an application workload experiencing the application-layer anomaly.

7. The computing system of any preceding clause, wherein the prompt further comprises one or more examples of application-layer anomalies and corresponding root causes, the one or more examples associated with a same domain as a domain of the application-layer anomaly within the system.

8. The computing system of any preceding clause, wherein the response further comprises natural language instructions for remediating the root cause of the application-layer anomaly.

9. The computing system of any preceding clause, wherein, to generate the response, the machine learning model applies Chain-of-Thought reasoning to:

identify the application-layer anomaly present within the diagnostics information for the elements,
analyze connectivity between elements across the plurality of layers of the system, the elements associated with the application-layer anomaly;
form one or more hypotheses about the root cause of the application-layer anomaly; and
verify each of the one or more hypotheses to obtain the root cause of the application-layer anomaly.

10. The computing system of any preceding clause, wherein, to generate, based at least in part on the generated prompt, the response, the machine learning model is configured to identify, as the root cause of the application-layer anomaly, at least one of:

high bandwidth consumption by an application;
high latency by the application;
overutilization of a Graphics Processing Unit (GPU) of a server;
packet acknowledgement (ACK) timeout by a Network Interface Controller (NIC) of the server;
blackholing of network traffic by a transit gateway network device;
packet loss by a gateway network device;
overutilization of a Central Processing Unit (CPU) of the gateway network device; or
network congestion within the NIC of the server or a switch.

11. The computing system of any preceding clause, wherein the machine learning model comprises a large language model (LLM).

12. The computing system of any preceding clause, wherein the plurality of layers comprise at least one of:

an application layer;
a compute layer;
a transit gateway layer; and
a gateway layer.

13. A method comprising:

generating, by processing circuitry of a computing system, a prompt for root cause analysis of an application-layer anomaly within a system of elements across a plurality of layers, the prompt comprising:

a cross-layer topology graph of the elements across the plurality of layers;
diagnostics information for the elements; and
a list of the elements and corresponding diagnostics information ordered according to a likelihood of being a source of a root cause of the application-layer anomaly;

providing, by the processing circuitry, the generated prompt to a machine learning model to obtain, based at least in part on the generated prompt, a response comprising the root cause of the application-layer anomaly; and
outputting, by the processing circuitry, the response.

14. The method of clause 13, further comprising:
performing, by the processing circuitry, statistical root cause analysis on the diagnostics information to obtain the list of the elements and corresponding diagnostics information ordered according to the likelihood of being the source of the root cause of the application-layer anomaly.

15. The method of clause 13 or clause 14, wherein the cross-layer topology graph comprises nodes and edges, wherein each node of the nodes corresponds to an element of the system, and wherein each edge of the edges corresponds to a connection between two elements of the elements, the two elements residing at different layers of the plurality of layers.

16. The method of any of clauses 13 to 15, wherein the diagnostic information comprises metrics data or telemetry data for each corresponding element of the elements.

17. The method of any of clauses 13 to 16, further comprising:
pruning, by the processing circuitry, the cross-layer topology graph to remove elements not associated with the execution of an application workload experiencing the application-layer anomaly.

18. The method of any of clauses 13 to 17, wherein the prompt further comprises one or more examples of application-layer anomalies and corresponding root causes, the one or more examples associated with a same domain as a domain of the application-layer anomaly within the system.

19. The method of any of clauses 13 to 18, wherein the plurality of layers comprise at least one of:

an application layer;
a compute layer;
a transit gateway layer; and
a gateway layer.

20. Computer-readable media encoding instructions that, when executed, are configured to cause processing circuitry to:

generate a prompt for root cause analysis of an application-layer anomaly within a system of elements across a plurality of layers, the prompt comprising:

a cross-layer topology graph of the elements across the plurality of layers;
diagnostics information for the elements; and
a list of the elements and corresponding diagnostics information ordered according to a likelihood of being a source of a root cause of the application-layer anomaly;

provide the generated prompt to a machine learning model to obtain, based at least in part on the generated prompt, a response comprising the root cause of the application-layer anomaly; and

output the response.

## Claims

1. A computing system comprising:
   processing circuitry in communication with storage media, the processing circuitry configured to:

   generate a prompt for root cause analysis of an application-layer anomaly within a system of elements across a plurality of layers, the prompt comprising:

   a cross-layer topology graph of the elements across the plurality of layers;
   diagnostics information for the elements; and
   a list of the elements and corresponding diagnostics information ordered according to a likelihood of being a source of a root cause of the application-layer anomaly;

   provide the generated prompt to a machine learning model to obtain, based at least in part on the generated prompt, a response comprising the root cause of the application-layer anomaly; and
   output the response.

2. The computing system of claim 1, wherein the processing circuitry is configured to:
   perform statistical root cause analysis on the diagnostics information to obtain the list of the elements and corresponding diagnostics information ordered according to the likelihood of being the source of the root cause of the application-layer anomaly.

3. The computing system of any of claims 1-2, wherein the cross-layer topology graph comprises nodes and edges, wherein each node of the nodes corresponds to an element of the system, and wherein each edge of the edges corresponds to a connection between two elements of the elements, the two elements residing at different layers of the plurality of layers.

4. The computing system of any of claims 1-3, wherein the diagnostic information comprises metrics data or telemetry data for each corresponding element of the elements.

5. The computing system of any of claims 1-4, wherein a JavaScript Object Notation, JSON, object comprises the cross-layer topology graph.

6. The computing system of any of claims 1-5, wherein the processing circuitry is configured to:
prune the cross-layer topology graph to remove elements not associated with the execution of an application workload experiencing the application-layer anomaly.

7. The computing system of any of claims 1-6, wherein the prompt further comprises one or more examples of application-layer anomalies and corresponding root causes, the one or more examples associated with a same domain as a domain of the application-layer anomaly within the system.

8. The computing system of any of claims 1-7, wherein the response further comprises natural language instructions for remediating the root cause of the application-layer anomaly.

9. The computing system of any of claims 1-8, wherein, to generate the response, the machine learning model applies Chain-of-Thought reasoning to:

identify the application-layer anomaly present within the diagnostics information for the elements,
analyze connectivity between elements across the plurality of layers of the system, the elements associated with the application-layer anomaly;
form one or more hypotheses about the root cause of the application-layer anomaly; and
verify each of the one or more hypotheses to obtain the root cause of the application-layer anomaly.

10. The computing system of any of claims 1-9, wherein, to generate, based at least in part on the generated prompt, the response, the machine learning model is configured to identify, as the root cause of the application-layer anomaly, at least one of:

high bandwidth consumption by an application;
high latency by the application;
overutilization of a Graphics Processing Unit, GPU, of a server;
packet acknowledgement, ACK, timeout by a Network Interface Controller, NIC, of the server;
blackholing of network traffic by a transit gateway network device;
packet loss by a gateway network device;
overutilization of a Central Processing Unit, CPU, of the gateway network device; or
network congestion within the NIC of the server or a switch.

11. The computing system of any of claims 1-10, wherein the machine learning model comprises a large language model, LLM.

12. The computing system of any of claims 1-11, wherein the plurality of layers comprise at least one of:

an application layer;
a compute layer;
a transit gateway layer; and
a gateway layer.

13. A method comprising:

generating, by processing circuitry of a computing system, a prompt for root cause analysis of an application-layer anomaly within a system of elements across a plurality of layers, the prompt comprising:

a cross-layer topology graph of the elements across the plurality of layers;
diagnostics information for the elements; and
a list of the elements and corresponding diagnostics information ordered according to a likelihood of being a source of a root cause of the application-layer anomaly;

## EP 4 770 028 A1

providing, by the processing circuitry, the generated prompt to a machine learning model to obtain, based at least in part on the generated prompt, a response comprising the root cause of the application-layer anomaly; and outputting, by the processing circuitry, the response.

14. The method of claim 13, further comprising steps corresponding to the functionality recited in any of claims 2-12.

15. Computer-readable media encoding instructions that, when executed by one or more programmable processors, cause the one or more programmable processors to become configured to carry out the method of any of claims 13-14.

FIG. 1

EP 4 770 028 A1

**FIG. 2**

FIG. 3

**402**
NEW INCIDENT

**404**
INCIDENT RETRIEVER

query →

RETRIEVAL CORPUS **404**

← return results

**410**
| INCIDENT-1 | INCIDENT-2 | . . . | INCIDENT-K |

In-context Examples Prompting

**412**

INCIDENT SUMMARIZATION **404**

DATA COLLECTION & CLEANING **406**

HISTORICAL INCIDENTS **408**

I want to act as … for root cause of Incidents *(task description)*

Title: Unable to restart App …
Summary: Customer is unable to restart app and is receiving a 500 error … (summarized incident summary)
Root cause: config server was down … (more in-context examples)
…
Title: Production Logic App Not Scaling …
Summary: 5500 RCA Process … the RCA be given extra effort
Root cause: *(new incident)*

In-context Learning

**414**

**416**
GPT-BASED RCA MODEL →

**418**
GENERATED ROOT CAUSE

**FIG. 4**

GENERATE A PROMPT FOR RCA OF AN APPLICATION-LAYER ANOMALY, THE PROMPT COMPRISING A CROSS-LAYER TOPOLOGY GRAPH OF ELEMENTS ACROSS A PLURALITY OF LAYERS OF A SYSTEM, DIAGNOSTICS INFORMATION FOR THE ELEMENTS, AND A LIST OF THE ELEMENTS AND CORRESPONDING DIAGNOSTICS INFORMATION ORDERED ACCORDING TO A LIKELIHOOD OF BEING A SOURCE OF A ROOT CAUSE OF THE APPLICATION-LAYER ANOMALY — 502

PROVIDE THE GENERATED PROMPT TO A MACHINE LEARNING MODEL TO OBTAIN A RESPONSE COMPRISING THE ROOT CAUSE — 504

OUTPUT THE RESPONSE — 506

FIG. 5

**COMPUTING DEVICE**
**600**

PROCESSOR(S)
602

COMMUNICATION UNIT(S)
606

INPUT DEVICE(S)
604

OUTPUT DEVICE(S)
612

USER INTERFACE DEVICE(S)
610

COMM.
CHANNEL(S)
614

**STORAGE DEVICE(S)**
**608**

APPLICATION(S)
622

ANALYSIS SYSTEM
17

OPERATING SYSTEM
616

NETWORK
MANAGEMENT
SYSTEM
10

**FIG. 6**

Europäisches
Patentamt

European
Patent Office

Office européen
des brevets

# EUROPEAN SEARCH REPORT

**Application Number**

EP 25 22 6538

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2024/007342 A1 (GUPTA RAHUL [IN] ET AL) 4 January 2024 (2024-01-04) * paragraph [0062] - paragraph [0230]; claims; figures * ----- | 1-15 | INV. H04L41/0631 H04L41/142 H04L41/16 |
| Y | CHEN YINFANG ET AL: "Automatic Root Cause Analysis via Large Language Models for Cloud Incidents", PROCEEDINGS OF THE FIRST INTERNATIONAL WORKSHOP ON SECURITY AND PRIVACY OF SENSING SYSTEMS ACMPUB27, NEW YORK, NY, USA, 22 April 2024 (2024-04-22), pages 674-688, XP059659930, DOI: 10.1145/3627703.3629553 ISBN: 9798400704420 * the whole document * ----- | 1-15 | ADD. H04L41/12 |
| A | TINGTING WANG ET AL: "A Comprehensive Survey on Root Cause Analysis in (Micro) Services: Methodologies, Challenges, and Trends", ARXIV.ORG CORNELL UNIVERSITY LIBRARY, 201 OLIN LIBRARY CORNELL UNIVERSITY ITHACA, NY 14853, 23 July 2024 (2024-07-23), XP091836731, * the whole document * ----- | 1-15 | |

**TECHNICAL FIELDS SEARCHED (IPC)**

H04L

The present search report has been drawn up for all claims

| Place of search | Date of completion of the search | Examiner |
|---|---|---|
| Munich | 29 April 2026 | Ceccarini, Giulio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P4C01)

## ANNEX TO THE EUROPEAN SEARCH REPORT
## ON EUROPEAN PATENT APPLICATION NO.

EP 25 22 6538

This annex lists the patent family members relating to the patent documents cited in the above-mentioned European search report.
The members are as contained in the European Patent Office EDP file on
The European Patent Office is in no way liable for these particulars which are merely given for the purpose of information.

29-04-2026

| Patent document cited in search report | Publication date | Patent family member(s) | | Publication date |
|---|---|---|---|---|
| US 2024007342 A1 | 04-01-2024 | CN | 119422353 A | 11-02-2025 |
| | | EP | 4548546 A1 | 07-05-2025 |
| | | US | 2024007342 A1 | 04-01-2024 |
| | | US | 2025150326 A1 | 08-05-2025 |
| | | US | 2025150327 A1 | 08-05-2025 |
| | | WO | 2024006980 A1 | 04-01-2024 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 00714624